(19) Europäisches Patentamt / European Patent Office / Office européen des brevets

(11) **EP 2 508 866 B1**

(12) **EUROPEAN PATENT SPECIFICATION**

(45) Date of publication and mention
of the grant of the patent:
**02.09.2015 Bulletin 2015/36**

(51) Int Cl.:
*G01N 3/30* *(2006.01)*          *C21D 8/02* *(2006.01)*
*C22C 38/00* *(2006.01)*          *C22C 38/06* *(2006.01)*
*C22C 38/60* *(2006.01)*

(21) Application number: **10847032.9**

(22) Date of filing: **03.09.2010**

(86) International application number:
**PCT/JP2010/065147**

(87) International publication number:
**WO 2011/108135 (09.09.2011 Gazette 2011/36)**

(54) **METHOD FOR DETERMINATION OF BRITTLE CRACK PROPAGATION STOPPING PERFORMANCE IN HIGH-INTENSITY THICK STEEL PLATE**

VERFAHREN ZUR BESTIMMUNG DER LEISTUNG EINES SPRÖDIGKEITSBRUCHWEITERLEITUNGSSTOPPS IN EINER STAHLPLATTE VON HOHER DICKE

PROCÉDÉ DE DÉTERMINATION DES PERFORMANCES D'ARRÊT DE LA PROPAGATION D'UNE FISSURE CASSANTE DANS UNE PLAQUE D'ACIER ÉPAISSE DE HAUTE INTENSITÉ

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **04.03.2010 JP 2010048417**

(43) Date of publication of application:
**10.10.2012 Bulletin 2012/41**

(73) Proprietor: **Nippon Steel & Sumitomo Metal Corporation**
**Tokyo 100-8071 (JP)**

(72) Inventors:
• **ISHIKAWA Tadashi**
**Tokyo 100-8071 (JP)**
• **INOUE Takehiro**
**Tokyo 100-8071 (JP)**
• **NAKASHIMA Kiyotaka**
**Tokyo 100-8071 (JP)**
• **SHIRAHATA Hiroyuki**
**Tokyo 100-8071 (JP)**
• **OOTANI Jun**
**Tokyo 100-8071 (JP)**
• **ITOH Akira**
**Tokyo 100-8071 (JP)**

(74) Representative: **Vossius & Partner**
**Patentanwälte Rechtsanwälte mbB**
**Siebertstrasse 3**
**81675 München (DE)**

(56) References cited:
**DE-A1- 3 044 841          JP-A- 2008 046 106**
**JP-A- 2009 063 320          JP-A- 2009 109 486**

• **SANG YONG SHIN ET AL: "Effects of Notch Shape and Specimen Thickness on Drop-Weight Tear Test Properties of API X70 and X80 Line-Pipe Steels", METALLURGICAL AND MATERIALS TRANSACTIONS A, SPRINGER-VERLAG, NEW YORK, vol. 38, no. 3, 29 March 2007 (2007-03-29), pages 537-551, XP019695742, ISSN: 1543-1940**
• **BYOUNGCHUL HWANG ET AL: "Correlation of crack-tip opening angle for stable crack propagation with charpy and drop-weight tear test properties in high-toughness API X70 pipeline steels", METALLURGICAL AND MATERIALS TRANSACTIONS A, SPRINGER-VERLAG, NEW YORK, vol. 37, no. 2, 1 February 2006 (2006-02-01), pages 371-380, XP019695647, ISSN: 1543-1940**

EP 2 508 866 B1

- **ZHOU F ET AL: "A rate-dependent cohesive model for simulating dynamic crack propagation in brittle materials", ENGINEERING FRACTURE MECHANICS, PERGAMON PRESS, NEW YORK, NY, GB, vol. 72, no. 9, 1 June 2005 (2005-06-01), pages 1383-1410, XP027694759, ISSN: 0013-7944 [retrieved on 2005-06-01]**
- **JUN OTANI ET AL.: 'Simplified Evaluation Method for Crack Arrestability in Steel Plate having Surface Layers with an Ultra Fine Grained Microstructure (First Report) : Proposal Equation to estimate arrestability from NRL Drop Weight Test data' TRANSACTIONS OF THE WEST-JAPAN SOCIETY OF NAVAL ARCHITECTS vol. 106, 31 August 2003, pages 275 - 280, XP008169009**
- **TSUTOMU FUKUI ET AL.: 'Simplified Evaluation Method for Crack Arrestability in Steel Plate having Surface Layers with Ultra Fine Grained Microstructure (Second Report) : Arrestability Evaluation Specification by NRL Drop weight Test' TRANSACTIONS OF THE WEST-JAPAN SOCIETY OF NAVAL ARCHITECTS vol. 106, 31 August 2003, pages 281 - 287, XP008169008**

**Description**

Technical Field

The present invention relates to a method of estimating brittle crack propagation arrestability of a high-strength steel plate used to construct a structure required to prevent large-scale damage or fracture occurring due to propagation of brittle cracks with a simple and rational technique and inspecting performance of the high-strength steel plate.

Background Art

In container ships or bulk carriers which are, unlike tankers, welded structures the number of partition walls in a hold is small and the topsides of the ships are largely open. In tankers, the inside is finely divided by oil tanks; inner walls and the upper deck also provide the hull strength.

Accordingly, in order to guarantee the strength of the hull structure in container ships, it is necessary to use a high-strength steel plate as a shell plate of the ships.

Recently, container ships have increased in size and large-scale container ships of 6000 to 20000 TEU (Twenty-foot Equivalent Unit) have been constructed and planned. Accordingly, steel plate for a shell plate of the ships have been increased in thickness and in strength, and steel plates (steel plate) with a thickness of from 50 mm to 100 mm, and yield strengths of 390 N/mm$^2$ and 470 N/mm$^2$ have been used.

TEU is an index indicating the loading capacity of a container ship and is expressed as the number of containers in terms of containers with a length of 20 feet.

In the steel plate used in the ships and the like, brittle crack propagation arrestability (hereinafter, also referred to as "arrestability") is a very important characteristic in estimating the safety of the steel plate.

In addition, there is a need for arrestability of a high-strength steel material used in hydraulic steel pipes (penstocks) for hydroelectric power generation.

In order to improve the arrestability, steel materials accompanied with various component compositions or manufacturing processes, or various large-scale welded structures, and the like have been developed and manufactured. In order to quantitatively evaluate the arrestability of the newly-developed steel materials, large-scale tests such as an ESSO test (a brittle crack propagation arresting test in which brittle cracks are artificially generated in a test piece, and the ability of the test piece to arrest the brittle cracks is evaluated) and a double tension test are carried out. For example, in the case of the ESSO test, a large-scale test piece with a size of about 500 mm × 500 mm × a certain thickness is prepared and a V notch is formed at an end of the test piece. A temperature gradient is given to the test piece and an impact load is applied to the V notch through a wedge to artificially generate a brittle crack. A Kca value (fracture toughness value) is calculated on the basis of the stress applied to the test piece, the temperature at a position where the propagation of the brittle crack is arrested, and the crack length.

The test is carried out while changing the temperature gradient condition and the impact load condition, the relationship between the crack arresting temperature and the Kca value is calculated, and the arrestability at a certain temperature is evaluated by the Kca value. As an indicator of the arrestability, a critical temperature (the lowest temperature) at which a predetermined Kca value can be guaranteed is referred to as a target Kca critical temperature and is defined as TKca. Specifically, for example, the target Kca critical temperature when a target Kca value is 6000 N/mm$^{1.5}$ is denoted as TKca6000.

When a steel plate is used for a steel structure of a container ship or the like, the design temperature or the lowest use temperature of the steel structure is defined. When the TKca6000 measured or estimated for a particular steel plate is equal to or lower than the design temperature, it is evaluated that the steel plate can provide satisfactory arrestability at the design temperature.

However, a large-scale test piece and large-scale testing equipment is required for measuring the Kca value and much labor and time are required until the test result is obtained. Particularly, large-scale testing equipment that can apply a tension load equal to or greater than 1000 tons is required for a large-scale test of a steel plate with a thickness of 50 mm or more. Therefore, in the performance test or quality control of a steel plate in the background art, it is necessary to obtain, in advance, a correlation between the arrestability of the entire steel plate and the results of simple small-scale tests using small-scale-test-pieces sampled from the steel plate (for example, see Patent document 1 and Non-patent documents 1 to 3). Using such obtained result, on the basis of the required value of the small-scale test calculated from the required arrestability, performance tests or quality control of steel plates have been performed, by performing small-scale tests on steel plates manufactured in a steelworks or the like, and determining whether the test result satisfies the required value of the small-scale test.

Non-patent document 1 discloses a correlation between the arrestability of a low-temperature steel plate with a thickness of about 16 mm and small-scale tests. Non-patent document 2 discloses a simple method of evaluating the arrestability of a multi-layered steel plate having a special ultra-fine-grain tissue in the surface part of the steel plate.

Non-patent document 3 discloses a simple method of evaluating the arrestability on the basis of a fracture appearance transition temperature obtained from a Charpy impact test of a central part in the thickness direction, a part a quarter way through the plate in the thickness direction, and a part 2 mm under the surface of an extremely- steel plate with a high strength of 790 N/mm$^2$.

JP 2009 109 486 uses the Charpy Test to determine the brittle-ductile transition temperature for samples taken on the surface of the tested plate.

Citation List

Patent Document

[Patent document 1] Japanese Unexamined Patent Application, First Publication No. 2007-302993

Non-Patent Document

[Non-patent document 1] "Correlation between Kca and Small-scale Arresting Test and Arrestability Controlling Factor" (Review of Arrestability of Steel Plate (5)), Summary of Lecture, Iron and Steel Institute of Japan, CAMP-ISIJ Vol. 4 (1991)-918
[Non-patent document 2] "Simple Method of Evaluating Arrestability of Ultra-fine-grain Surface Steel Plate (One) - Establishment of Arrestability Estimating Equation-", West-Japan Society of Naval Architects, Newsletter No. 106 (August, H15), P275-280
[Non-patent document 3] "Influence of Toughness Distribution in Plate-pressing Direction on Arrestability of Extremely-thick HT790", National Convention, Japan Welding Society, Summary of Lecture, Vol. 49 (Published on August 25, 1991), P108-109

Summary of Invention

Problems to be Solved by the Invention

For the purpose of assuring safety of a large-scale container ship, it was found that the arrestability of 4000 N/mm$^{1.5}$ to 6000 N/mm$^{1.5}$ at -10°C is very important for a steel plate (large-thickness steel plate) with a thickness of 50 mm to 100 mm and yield strengths of 390 N/mm$^2$ and 470 N/mm$^2$. In order to satisfy this requirement of arrestability, steel plates having high arrestability have been developed, but it is not easy to provide all steel plates with the arrestability of 4000 N/mm$^{1.5}$ to 6000 N/mm$^{1.5}$. Accordingly, it has become required for the steelworks to confirm the arrestability through the use of a delivery test of a steel plate or the like. However, as described above, it is difficult to perform large-scale tests such as an ESSO test on all steel plates. There is a large variation in correlation between the arrestability in the large-scale tests and the results of the small-scale tests: in consideration of this variation, there has been a tendency to set extremely-demanding requirements for values of the small-scale tests that are not stably obtainable in steelworks. Accordingly, there has been a need for a simple method of evaluating the arrestability of a steel plate with a thickness of 50 mm to 100 mm, and a yield strength of 390 N/mm$^2$ and 470 N/mm$^2$ with high accuracy through the use of small-scale tests.

Therefore, the inventors have studied the method of obtaining the correlation between: the arrestability of the entire steel plate; and the results of the simple and easy small-scale tests using small-scale-test-pieces sampled from the steel plate, with a higher accuracy than in the past.

The inventors first manufactured high-strength steel plates through the use of plural compositions and manufacturing methods, and calculated Kca values of the high-strength steel plates through the ESSO tests using the techniques disclosed in Non-patent documents 1 and 2. Small-scale-test-pieces were sampled from the steel plates, various small-scale tests (a V-notch Charpy impact test and a drop weight test, and the like) were performed on the sampled small-scale-test-pieces, and characteristic values of the small-scale-test-pieces were obtained. In addition, the correspondence between the Kca values which are obtained large-scale test results and the characteristic values of the small-scale-test-pieces was examined. As described above, when the characteristic values obtained through the small-scale tests and the arrestability are correlated using the existing techniques of obtaining the correlation for steel plates with thickness of about 20 mm, it was proved that it was not possible to obtain the correlation with satisfactory accuracy.

Therefore, an object of the present invention is to provide a method of greatly improving a small-scale test method and an evaluation method thereof, estimating the arrestability of a high-strength steel plate with a thickness of 50 mm or more using a simple technique without performing a large-scale test such as the ESSO test or the double tension test, and inspecting performance of the high-strength steel plate.

Means for Solving the Problem

The inventors have extensively examined the reasons why the existing technique of correlating the small-scale test results with the arrestability could not be applied for the relationship between the arrestability of a high-strength steel plate with a thickness of 50 mm or more and the small-scale test results. Particularly, a method that can be applied to various steel types and manufacturing methods of steel materials has been studied. As a result, the inventors obtained knowledge that "a brittle crack propagation behavior varies depending on the position in the thickness direction where the brittle crack is generated, and this variation of the propagation behavior has a great influence on the arrestability of the entire steel plate."

The inventors examined the brittle crack propagation behavior in a high-strength steel plate with a thickness of 50 mm or more in detail on the basis of the knowledge. As a result, it was proved that, by sampling plural small-scale-test-pieces in the thickness direction and performing small-scale tests using suitable methods depending on the sampling positions, and appropriately combining the test results, so that the variation of the crack propagation behavior in the thickness direction is reflected in the evaluation of arrestability, the combination results could provide the high-accuracy correspondence to the Kca value obtained through the large-scale test.

In more detailed examination, the inventors obtained the results of composite small-scale tests performed on the small-scale-test-pieces sampled from at least the surface layer of a steel plate and the central part (half way through the steel plate in the thickness direction) of the steel plate using methods suitable for the sampling positions, and found that such results had a good correlation with the Kca value (fracture toughness value) obtained through the large-scale test so as to reflect the variation of the crack propagation behavior in the thickness direction in the evaluation of arrestability.

Furthermore, characteristic evaluating methods for the small-scale-test-piece sampled from the surface layer of a steel plate was studied, which is an important factor for the arrestability estimation of high-strength steel plates. As a result, it was found that the suitable method was a drop weight test. It was also found that, for a small-scale-test-pieces sampled from the inner region of a steel plate, the drop weight test was not desirable: and rather a small-scale test of measuring a brittle facture rate or absorbed energy is desirable. That is, it is preferable to perform small-scale tests using different methods for small-scale-test-pieces sampled from the surface layer and small-scale-test-pieces sampled from the inner region.

The present invention is made on the basis of the above knowledge and the substance thereof is as follows, and given by the claims.

(1) According to an aspect of the present invention, there is provided a method of determining brittle crack propagation arrestability of a high-strength steel plate, including the steps of: performing a large-scale test and a composite small-scale test using standard steel; calculating a correlation model of the result of the large-scale test and the result of the composite small-scale test using the standard steel; performing the composite small-scale test using steel specimen; and estimating the brittle crack propagation arrestability of the steel specimen by substituting the result of the composite small-scale test using the steel specimen into the correlation model, wherein the composite small-scale test includes the sub steps of: (a) collecting a surface-small-scale-test-piece including a surface part of a steel plate; (b) collecting inner-small-scale-test-pieces from one or more inner regions not including the surface part of the steel plate; (c) performing a drop weight test using the surface-small-scale-test-piece; and (d) performing a small-scale test of measuring brittle fracture percentage or absorbed energy using the inner-small-scale-test-pieces, and wherein the composite small-scale test includes performing the small-scale test on the surface-small-scale-test-piece and the inner-small-scale-test-pieces using different methods.

(2) In the method according to (1), when it is defined that Y represents an NDT temperature which is the result of the drop weight test on the surface-small-scale-test-piece, X1 represents a fracture appearance transition temperature or an absorbed energy transition temperature which is the result of the small-scale test using the inner-small-scale-test-pieces, a, b, and d represent coefficients, and TKca represents a target Kca critical temperature, the correlation model may be expressed by $a \cdot Y + b \cdot X1 + d = TKca$.

(3) In the method according to (2), the step of estimating the brittle crack propagation arrestability of the steel specimen may include the sub steps of: calculating TKca' which is an estimated value of the target Kca critical temperature of the steel specimen by substituting Y' and X1', which are the results of the composite small-scale test using the steel specimen, into the correlation model; and comparing the measured target Kca critical temperature TKca of the standard steel with the TKca' and determining that the brittle crack propagation arrestability of the steel specimen is good when $TKca' \leq TKca$ is satisfied.

(4) In the method according to (1), when it is defined that Y represents an NDT temperature which is the result of the drop weight test on the surface-small-scale-test-piece, X1 represents a fracture appearance transition temperature which is the result of the small-scale test using an inner-small-scale-test-piece sampled from a first inner region, X2 represents a fracture appearance transition temperature which is the result of the small-scale test using an inner-small-scale-test-piece sampled from a second inner region, a, b, c, and d represent coefficients, and TKca represents a target Kca critical temperature, the correlation model may be expressed by:

$$a \cdot Y + b \cdot X1 + c \cdot X2 + d = TKca.$$

(5) In the method according to (4), the step of estimating the brittle crack propagation arrestability of the steel specimen may include the sub steps of: calculating TKca' which is an estimated value of the target Kca critical temperature of the steel specimen by substituting Y', X1', and X2', which are the results of the composite small-scale test using the steel specimen, into the correlation model; and comparing the measured target Kca critical temperature TKca of the standard steel with the TKca' and determining that the brittle crack propagation arrestability of the steel specimen is good when TKca' $\leq$ TKca is satisfied.

(6) In the method according to any one of (1) to (5), the inner-small-scale-test-pieces may be one of a chevron-notch Charpy impact test piece, a V-notch Charpy impact test piece, a sharp-notch Charpy impact test piece, a pressed-notch Charpy impact test piece, a pre-cracked Charpy impact test piece, a three-face sharp-notch Charpy impact test piece, and a U-notch Charpy impact test piece.

(7) In the method according to any one of (1) to (5), the inner region may be a region not including the central part in the thickness direction but including a position located within 5 mm from the central part in the thickness direction.

(8) In the method according to any one of (1) to (5), the inner region may be a region including a position a quarter way through in the thickness direction.

(9) In the method according to any one of (1) to (5), the yield strength of the high-strength steel plate may be in the range of 240 to 1000 N/mm$^2$, and the high-strength steel plate may be a steel plate for a large hull or a hydraulic steel pipe.

(10) In the method according to any one of (1) to (5), the thicknesses of the surface-small-scale-test-piece and the inner-small-scale-test-pieces may be in the range of 10 to 25 mm.

(11) In the method according to any one of (1) to (5), the thickness of the high-strength steel plate may be equal to or more than 50 mm.

(12) In the method according to any one of (1) to (5), a brittle weld bead may be disposed on the surface corresponding to the surface of the steel specimen from the surface of the surface-small-scale-test-piece in the drop weight test, and a notch may be formed on the surface of the inner-small-scale-test-piece along the thickness direction of the steel specimen.

Advantageous Effects of Invention

According to the present invention, when evaluating the arrestability of a high-strength steel plate used for a large-scale welded structure, it is not necessary to use a large-scale test piece such as a test piece for an ESSO test or a large-scale fracture testing equipment of 1000 tons or more, for each steel pieces of the manufactured lots. By once performing a large-scale test on a standard steel specimen in advance and then performing small-scale tests on small-scale-test-pieces sampled from the standard steel specimen, it is possible to calculate the correlation between the large-scale test result and the small-scale test results. Then, small-scale-test-pieces are sampled from steel specimen of plural manufacture lots, and small-scale tests are performed thereon. By applying the previously-calculated correlation to the result of the small-scale tests, it is possible to conveniently estimate the arrestability of steel specimen which can be normally obtained from only a large-scale test. The drop weight test is used for a small-scale-test-piece sampled from the surface part of the steel specimen. On the other hand, the test of measuring brittle fracture percentage or absorbed energy is used for a test pieces sampled from the inner region of the steel specimen. Accordingly, it is possible to improve the accuracy in estimation of arrestability and to skip a large-scale test for each lot. As a result, using a simple technique, it can be rapidly and satisfactorily estimated whether the high-strength steel plate of each lot is capable of preventing a fatal large-scale damage or fracture that may result in a large-scale welded structure to break. Therefore, the method according to the present invention can be effectively used in quality control when manufacturing a high-strength steel plate used, for example, for a large-scale welded structure.

Brief Description of Drawings

FIG. 1A is a diagram schematically illustrating the propagation behavior of a brittle crack propagating in a steel plate, where a brittle crack propagation behavior in a steel plate with a thickness T5 of 50 mm or more is shown.

FIG. 1B is a diagram schematically illustrating the propagation behavior of a brittle crack propagating in a steel plate, where a brittle crack propagation behavior in a steel plate with a thickness T2 of 20 mm is shown.

FIG. 2A is a diagram illustrating positions at which a small-scale-test-piece is sampled from a steel plate.

FIG. 2B is a diagram illustrating positions at which a small-scale-test-piece is sampled from a steel plate.

FIG. 3 is a diagram illustrating positions and directions in which a test piece is sampled from a steel plate.

FIG. 4A is a diagram schematically illustrating the arrangement of a testing equipment and a small-scale-test-piece in a drop weight test.

FIG. 4B is a diagram schematically illustrating a method of determining a test result of a drop weight test.

FIG. 5A is a diagram illustrating the shape of a small-scale-test-piece which is a drop weight test piece, in which numerical values represent sizes (unit: mm).

FIG. 5B is a diagram illustrating the shape of a small-scale-test-piece, in which a schematic side view and a schematic front view of a V-notch Charpy impact test piece are shown.

FIG. 5C is a diagram illustrating the shape of a small-scale-test-piece which is a one-face sharp-notch Charpy impact test piece, in which numerical values represent sizes (unit: mm).

FIG. 5D is a diagram illustrating the shape of a small-scale-test-piece which is a three-face sharp-notch Charpy impact test piece, in which numerical values represent sizes (unit: mm).

FIG. 5E is a diagram illustrating the shape of a small-scale-test-piece which is a chevron-notch Charpy impact test piece.

FIGS. 6A to 6E are diagrams showing comparative examples, illustrating correlations between a composite small-scale test using V-notch Charpy impact test pieces only and the arrestability measured in a large-scale test, where test pieces sampled from various positions are used for the small-scale test. FIG 6A is a correlation diagram when either one of a small-scale-test-piece 10a and a small-scale-test-piece 11 shown in FIG. 2B is used.

FIG. 6B is a correlation diagram when a small-scale-test-piece 8a shown in FIG. 2B is used.

FIG 6C is a correlation diagram when a small-scale-test-piece 9a shown in FIG. 2B is used.

FIG. 6D is a correlation diagram when both the small-scale-test-pieces 10a and 9a shown in FIG. 2B are used and the weighted-average of the obtained small-scale test results is calculated.

FIG. 6E is a correlation diagram when both the small-scale-test-pieces 10a and 8a shown in FIG. 2B are used and the weighted-average of the obtained small-scale test results is calculated.

FIGS. 7A to 7E are diagrams showing comparative examples, illustrating correlations between a composite small-scale test using only chevron-notch Charpy impact test pieces and the arrestability measured in a large-scale test, where test pieces sampled from various positions are used for the small-scale test. FIG. 7A is a correlation diagram when wither one of the small-scale-test-piece 10a and the small-scale-test-piece 11 shown in FIG. 2B is used.

FIG. 7B is a correlation diagram when the small-scale-test-piece 8a shown in FIG. 2B is used.

FIG. 7C is a correlation diagram when the small-scale-test-piece 9a shown in FIG. 2B is used.

FIG. 7D is a correlation diagram when both the small-scale-test-pieces 10a and 9a shown in FIG. 2B are used and the weighted-average of the obtained small-scale test results is calculated.

FIG. 7E is a correlation diagram when both the small-scale-test-pieces 10a and 8a shown in FIG. 2B are used and the weighted-average of the obtained small-scale test results is calculated.

FIG. 8A is a diagram illustrating a correlation between a composite small-scale test result using a method according to a first embodiment of the present invention and the arrestability measured in a large-scale test, where a drop weight test is performed as a surface small-scale test, a chevron-notch Charpy impact test is performed as an inner small-scale test, and the weighted-average of the test results is calculated.

FIG. 8B is a diagram illustrating a correlation between a composite small-scale test result using a method according to a comparative example and the arrestability measured in a large-scale test, where a drop weight test is performed as a surface small-scale test, a drop weight test is performed as an inner small-scale test, and the weighted-average of the test results is calculated.

FIG. 8C is a diagram illustrating a correlation between a composite small-scale test result using a method according to a second embodiment of the present invention and the arrestability measured in a large-scale test, where inner-small-scale-test-pieces are sampled from two positions, a drop weight test is performed as a surface small-scale test, a chevron-notch Charpy impact test is performed as an inner small-scale test, and the weighted-average of the test results is calculated.

FIG. 8D is a diagram illustrating a correlation between a composite small-scale test result using a method according to the first embodiment of the present invention and the arrestability measured in a large-scale test. The difference of this diagram from that of FIG. 8A is that, the V-notch Charpy impact test instead of the chevron-notch Charpy impact test is performed as the inner small-scale test.

FIG. 9A and 9B are flowcharts illustrating a coefficient determining step of estimating the arrestability of steel specimen from the small-scale test results. FIG. 9A illustrates the steps in the case of measurement at two points.

FIG. 9B illustrates a step of determining coefficients to be added in the case of measurement at three points.
FIG. 10A is a diagram schematically illustrating a fracture face in a drop weight test for surface ultra-fine-grain steel.
FIG 10B is a diagram schematically illustrating a fracture face in a drop weight test for general steel.

Description of Embodiments

(First Embodiment)

Hereinafter, a method of determining brittle crack propagation arrestability of a high-strength steel plate according to a first embodiment of the present invention will be described with reference to the accompanying drawings.

High-strength steel plates subjected to the determining method according to this embodiment is steel plates for large hull or hydraulic steel pipe, and it is preferable that the thickness thereof is equal to or more than 50 mm and the yield strength thereof is in the range of 240 to 1000 $N/mm^2$. First, for example, five to ten high-strength steel plates, which are to be used as standard steels, are manufactured with specific compositions and methods, and the Kca values of the high-strength steel plates are measured by the ESSO test using the techniques disclosed in Non-patent documents 1 and 2. Small-scale-test-pieces are sampled from the steel plates of standard steel, various small-scale tests to be described later are performed thereon, and characteristic values of the small-scale-test-pieces are obtained.

In this specification, a small-scale test means a test in which a part of the test materials prepared as described above is cut out to sample a small-scale-test-piece, and the small-scale-test-piece is used in the test. As described in detail later, the sampling of various small-scale-test-pieces may be performed from one position of a test material or may be performed from plural positions thereof. The small-scale-test-piece may also be called a partial test.

In this embodiment, when estimating the brittle crack propagation arrestability of a high-strength steel plate on the basis of the results of small-scale tests, the small-scale-test-pieces used for the small-scale test are sampled from one surface region and at least one inner region out of plural regions partitioned in the thickness direction of the high-strength steel plate.

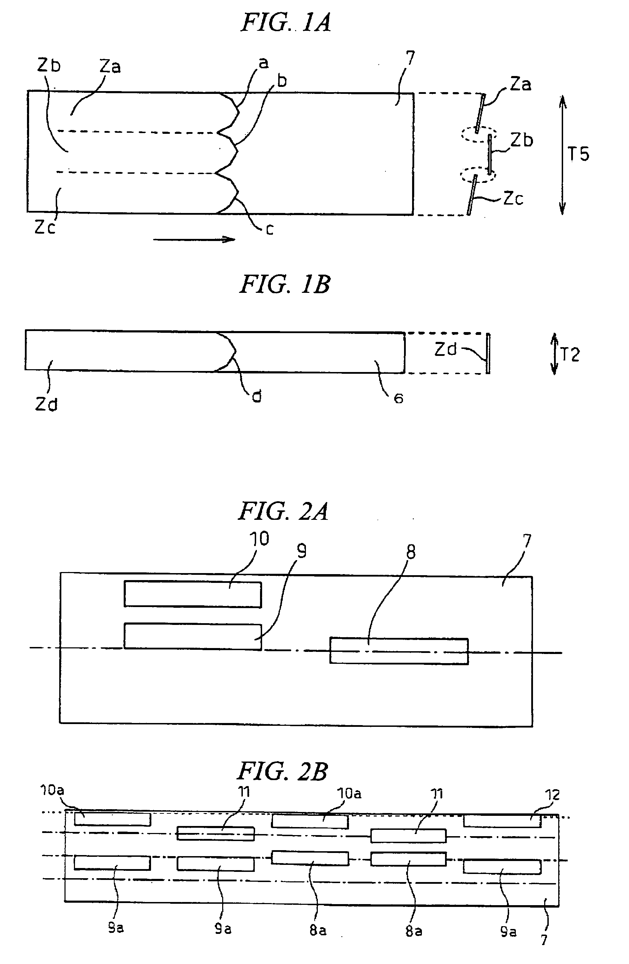

FIG. 1A is a schematic sectional view along the thickness direction of a steel plate 7 and illustrates the propagation behavior of a brittle crack propagating in the direction of the arrow in the steel plate. The upward and downward directions in the drawing sheet are the thickness direction of the steel plate 7 and the top and bottom ends represent the front and rear surfaces of the steel plate. A crack is generated at the left end of the steel plate and propagates in the arrow direction.

FIG. 1A illustrates the brittle crack propagation behavior in the steel plate 7 with a thickness T5 of 50 mm or more, and FIG 1B illustrates the brittle crack propagation behavior in a steel plate with a thickness T2 of about 20 mm.

First, the difference between the brittle crack propagation behavior in the steel plate with a thickness of 50 mm or more and the brittle crack propagation behavior in the steel plate with a thickness of about 20 mm will be described below.

Hitherto, the correlation between the brittle crack propagation characteristic and the result of a small-scale test for a steel plate with a thickness of about 20 mm has been studied, and as a result, it has been thought that a brittle crack propagation mechanism is as follows.

As shown in FIG. 1B, in the steel plate 6 with a thickness of about 20 mm, a crack tip d (which is formed along the thickness direction of the steel plate 6 and reaches the surface) of a brittle crack propagation face Zd moves in the arrow direction and thereby the brittle crack propagates. Since the brittle crack propagation face Zd is a continuous face along the thickness direction of the steel plate 6, the result of the small-scale test is not greatly affected by the sampling positions (the surface part of the steel plate, the central part of the steel plate) of the small-scale-test-piece but is constant, and this value represents the brittle crack propagation characteristic of the steel plate with a thickness of about 20 mm.

However, in the steel plate with a thickness of 50 mm or more, as shown in FIG. 1A, plural brittle crack propagation faces (Za, Zb, and Zc in the drawing) are formed in the thickness direction of the steel plate 7. Each of the brittle crack propagation faces (Za, Zb, and Zc) is a continuous face along the thickness direction of the steel plate 7. On the other hand, the brittle crack propagation faces are present discontinuously along the thickness direction of the steel plate 7. That is, the brittle crack propagation faces (Za, Zb, and Zc) are generally included in different planes parallel to the thickness direction but not overlapping with each other. The crack tips a, b, and c independently move in the arrow direction and the brittle cracks thus travel.

That is, as shown on the right side of FIG 1A, a level difference (see the positions surrounded by dotted lines) may be present between the brittle crack propagation faces (Za, Zb, and Zc). Therefore, when small-scale-test-pieces are sampled from a steel plate with a thickness of 50 mm or more and a small-scale test is performed thereon, the test results are greatly affected by the sampling positions of the small-scale-test-pieces, and are dispersed. As a result, the test results of the small-scale-test-pieces arbitrarily sampled from the steel plate with a thickness of 50 mm or more do not satisfactorily represent, if only a single test is used, the brittle crack propagation characteristic of the steel plate with a thickness of 50 mm or more.

In this way, the brittle crack propagation behavior in the steel plate with a thickness of 50 mm or more is greatly affected by the difference in brittle crack propagation characteristic between the positions in the thickness direction and is thus not constant in the thickness direction.

Here, the reason for the difference between crack propagation behavior in the central part in the thickness direction of the steel plate with a thickness of 50 mm or more and the crack propagation behavior in the vicinity of the surface part of the steel plate will be described below.

The reason for the difference in brittle crack propagation behavior in the thickness direction in the steel plate with a thickness of 50 mm or more relates to the fact that the crack tip in the inner region in the thickness direction has a plane strain condition and the crack tip in the vicinity of the surface has a plane stress condition. That is, since the crack tip in the inner region in the thickness direction of the steel plate has a plane strain condition, the size of a plastic zone formed at the crack tip is smaller than that of the plastic zone formed at the crack tip in the vicinity of the surface and thus the resistance to the crack propagation becomes smaller, whereby the brittle crack easily progresses.

On the other hand, in the vicinity of the surface (in the surface part) of the steel plate, since the crack tip has a plane stress condition, the size of the plastic zone formed at the crack tip is larger than that of the plastic zone at the crack tip present in the inner region and thus the brittle crack hardly propagates in comparison with the inner region. Accordingly, it has been widely known that a shear-lip is formed in the vicinity of the surface part to greatly contribute to the improvement in brittle crack propagation arrestability. In this way, a phenomenon completely different from that in the inner region occurs in the surface part of the steel plate. The inventors studied the optimal test method of the surface part and found that a drop weight test capable of evaluating the propagation of a brittle crack in the surface is the best method.

In this way, in the steel plate with a thickness of 50 mm or more, variations in the thickness direction exists in the stress-strain-field of the crack tip that serves as a driving force causing the brittle crack to propagate, and in the enlargement of the plastic zone at the crack tip, and thus, the brittle crack propagation behavior varies in the thickness direction.

In the steel plate with a thickness of 50 mm or more, the temperature history in the thickness direction may vary in manufacturing, and also the strain in the inner region of the steel plate may vary in the thickness direction. Accordingly, a crystal grain size or texture of a steel plate tissue often greatly varies in the thickness direction.

Therefore, when a small-scale-test-piece is sampled from an arbitrary position of the steel plate with a thickness of 50 mm or more and a small-scale test is performed thereon, the test results vary greatly due to the influence of the sampling position of the small-scale-test-piece, and does not represent the brittle crack propagation characteristic of the entire steel plate with a thickness of 50 mm or more.

In this embodiment, on the basis of the fact that the brittle crack propagation behavior of the steel plate with a thickness of 50 mm or more varies in the thickness direction, small-scale-test-pieces used in the small-scale-test are sampled from plural regions partitioned along the thickness direction of the high-strength steel plate.

In the following description, a test piece sampled so as to include at least the surface of a steel plate or a position within about 2 mm from the surface is called a surface-small-scale-test-piece. In this embodiment, in addition to the surface-small-scale-test-piece, a test piece is sampled from a position in the inner region in the thickness direction of the steel plate. It is further preferable, as in a second embodiment to be described later, that test pieces are sampled from two or more positions. In the following description, a test piece not including the surface part of the steel plate but being sampled from a position 10 mm or more in depth from the surface in the thickness direction of the steel plate is called an inner-small-scale-test-piece.

When an inner-small-scale-test-piece is sampled, there may be cases in which the sampling position may exclude the central part in the thickness direction (a center segregation part) of the steel plate. As shown in FIG. 2A, when the small-scale-test-piece 8 is sampled from the central part in the thickness direction of the steel plate 7, it is generally thought that the test result represents the brittle crack propagation behavior of the central part in the thickness direction. However, an alloy element concentrated zone called a central segregation part often exists in the central part in the thickness direction of the steel plate manufactured through a continuous casting process. When the central segregation is significant, it is thought that the central segregation part greatly affects the propagation of brittle cracks.

Therefore, the inventors experimentally studied the influence of the central segregation part on the brittle crack propagation behavior. As a result, it was shown that the local direct influence of the central segregation part on the brittle crack propagation behavior is small.

On the other hand, as the result of another experiment, it was shown that the central segregation part serves as a reason for the marked deterioration of the brittle crack propagation behavior. The small-scale test result is a superimposed outcome of the brittle crack generation characteristics and the brittle crack propagation characteristics. Therefore, even when the brittle crack propagation arrestability is the same, when the central segregation part largely affects the brittle crack generation characteristics, a problem occurs in that there are large variations among the small-scale test results, and thus the brittle crack propagation characteristic cannot be satisfactorily estimated.

Therefore, the inventors discovered that, when the central segregation is significant in the inner region of the steel plate, it is preferable to sample a small-scale-test-piece from a region 9, in which the brittle crack propagation face does not include the central segregation part, as shown in FIG. 2A. When the central segregation is not significant in the inner region of the steel plate, a small-scale-test-piece including the central part in the thickness direction may be sampled.

When a small-scale-test-piece not including the central part in the thickness direction is sampled from the vicinity of the central part in the thickness direction of a steel plate, the small-scale-test-piece is preferably sampled from a region separated by 0.1 mm or more (more preferably from a region separated by 1 mm or more) in the thickness direction from the central part in the thickness direction, and is preferably sampled from a region including the position within 5 mm from the central part in the thickness direction. Since the test result using the small-scale-test-piece sampled so as not to include the central part in the thickness direction of the steel plate but to include the position within 5 mm from the central part in the thickness direction excludes the influence of the central segregation part, it satisfactorily represents the brittle crack propagation characteristic of the central part in the thickness direction.

As shown in FIG. 2A, when a small-scale-test-piece 10 is sampled from the vicinity of the surface of the steel plate (the surface part) in which the crack tip has a plane stress condition and a brittle crack has a difficulty in propagation, it is more preferable that a test piece (surface-small-scale-test-piece) including the surface of the steel plate is collected. When a layer having a characteristic greatly different from that of the inner region of the steel plate, such as scales and decarburized parts, is present after manufacturing the steel plate at the surface thereof, such a layer, defined as thin as feasible, may be cut out and removed and then a test piece may be sampled. Even when the surface is cut out, if a region including significantly further than 2 mm from the surface of the steel plate is cut out, a test piece representing the crack propagation characteristic of the surface of the steel plate may not be obtained. When the surface of the steel plate is cut out for the purpose of avoiding the influence of scales, decarburized parts, and the like, it is necessary to set the cutting range to be within 2 mm from the surface of the steel plate. In this embodiment, the surface-small-scale-test-piece is sampled from the position 12 shown in FIG. 2B and the inner-small-scale-test-piece is sampled from one of the positions 9a shown in FIG. 2B.

As an inner-small-scale-test-piece, a small-scale-test-piece including the depth position (the position 11 shown in FIG. 2B) with a quarter depth of the thickness may be sampled from the surface of the steel plate instead of the position 9a shown in FIG. 2B. Since the region including the position a quarter way through in the thickness direction of the steel plate is a region that can represent the brittle crack propagation behavior of the region including the brittle crack propagation faces Za and Zc shown in FIG. 1A, the region including the quarter position is a desirable region for a small-scale-test-piece to be sampled from.

The positions from which a small-scale-test-piece is sampled are shown in FIG. 2B. The small-scale-test-piece 9a is a small-scale-test-piece including a position located within 5 mm from the central part in the thickness direction. The small-scale-test-piece 10a is a small-scale-test-piece including a position separated by 2 mm from the surface of the steel plate. The small-scale-test-piece 11 is a small-scale-test-piece including a position a quarter way through in the thickness direction of the steel plate. The small-scale-test-piece 8a is a small-scale-test-piece including the central part in the thickness direction. The small-scale-test-piece 12 includes the surface of the steel plate and a position under 2 mm from the surface of the steel plate.

In the inner-small-scale-test, it is necessary to sample a test piece separated by 10 mm or more from the surface of the steel plate so as to avoid the influence of a shear-lip. A test piece including the central part in the thickness direction, a test piece sampled so as to include a position within 5 mm from the central part in the thickness direction, and a small-scale-test-piece sampled so as to include the position a quarter way through in the thickness direction of the steel plate can be used as the inner-small-scale-test-pieces.

The size of the inner-small-scale-test-piece in the thickness direction of the steel plate is preferably in the range of 10 to 20 mm so as to correspond to the width of the brittle crack propagation face. In a steel plate with a thickness of 50 mm or more, since the brittle crack propagation behavior varies in the thickness direction, it is preferable that plural small-scale-test-pieces are collected at different positions along the thickness direction.

In this way, by sampling the small-scale-test-pieces and performing a small-scale test, it is possible to obtain a test result corresponding to the brittle crack propagation behavior varying in the thickness direction. It is possible to estimate the arrestability of a steel plate with a thickness of 50 mm or more on the basis of this test result. The estimation method will be described later.

A small-scale test to be performed on a small-scale-test-piece sampled from a region other than the surface part of a steel plate (an inner-small-scale-test-piece) is not particularly limited, as long as it is a small-scale test of measuring brittle fracture percentage or absorbed energy. In those types of tests, it is possible to satisfactorily evaluate the behavior when a crack propagates in the small-scale-test-piece.

For example, various Charpy impact test pieces such as a V-notch Charpy impact test piece, a sharp-notch Charpy impact test piece, a pressed-notch Charpy impact test piece, a pre-cracked Charpy impact test piece, a three-face-sharp-notch Charpy impact test piece, a chevron-notch Charpy impact test piece, and a U-notch Charpy impact test piece can be used. Using any test piece, it is possible to measure the absorbed energy in the impact test. It is also possible to measure a ductile fracture percentage or a brittle fracture percentage. There is generally a positive correlation between the ductile fracture percentage and the absorbed energy in a small-scale test for a specific steel material. In any of the measurements of the brittle fracture percentage and the absorbed energy, the measurement includes not only the surface part of the small-scale-test-piece but also the internal part of the test piece, and thus the result sufficiently reflects the stress acting on the entire sectional surface of the small-scale-test-piece that is integrally accumulated. Accordingly, it is thought that it is possible to evaluate the brittle crack propagation characteristic in a steel plate with high accuracy by measuring the brittle fracture percentage (or the ductile fracture percentage) or the absorbed energy as a method of evaluating an inner-small-scale-test-piece. Since the total sum of the ductile fracture percentage and the brittle fracture percentage is 100%, the ductile fracture percentage may be used instead of the brittle fracture percentage.

On the contrary, when a drop weight test is used as the inner small-scale test, a brittle weld bead (crack starter weld) is disposed on a surface arbitrarily formed at the time of preparing an inner-small-scale-test-piece. Accordingly, the obtained test result directly depends on the crack propagation characteristic of the arbitrary surface of the test piece, which is different from the original surface of the steel plate. In this case, it is not possible to accurately evaluate the original brittle crack propagation characteristic of the steel plate.

The V-notch Charpy impact test or the drop weight test may be performed using a test method based on the ASTM standard or the JIS standard. In the chevron-notch Charpy impact test or the sharp-notch Charpy impact test, it is preferable that the shape of a notch should be designed to cause a brittle crack to be easily generated and the shape of a test piece should be adjusted to efficiently extract the contribution of the brittle crack propagation characteristic. The preferable shape of a test piece will be described later.

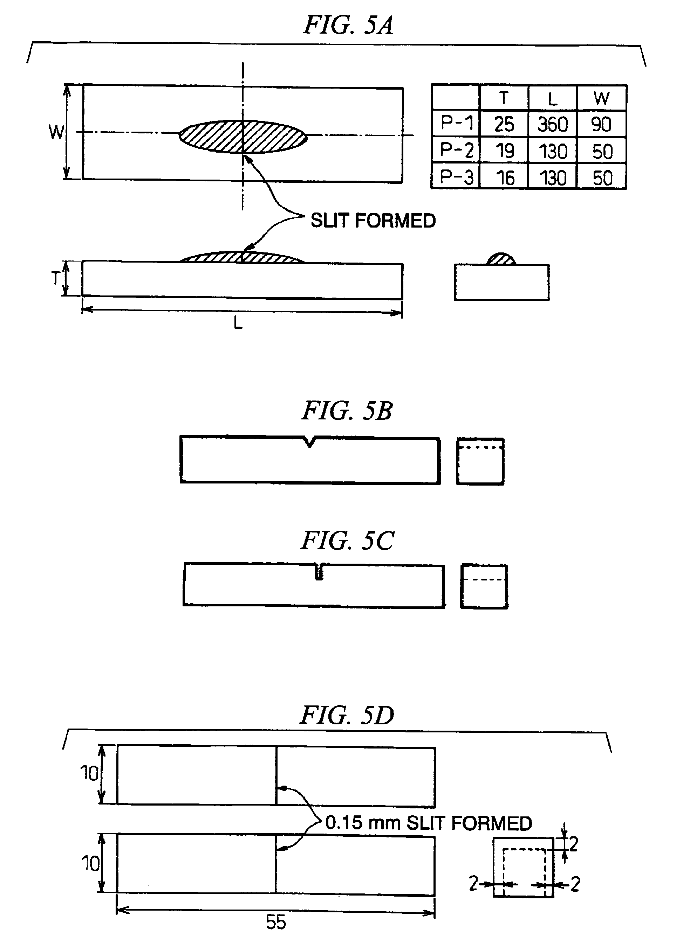

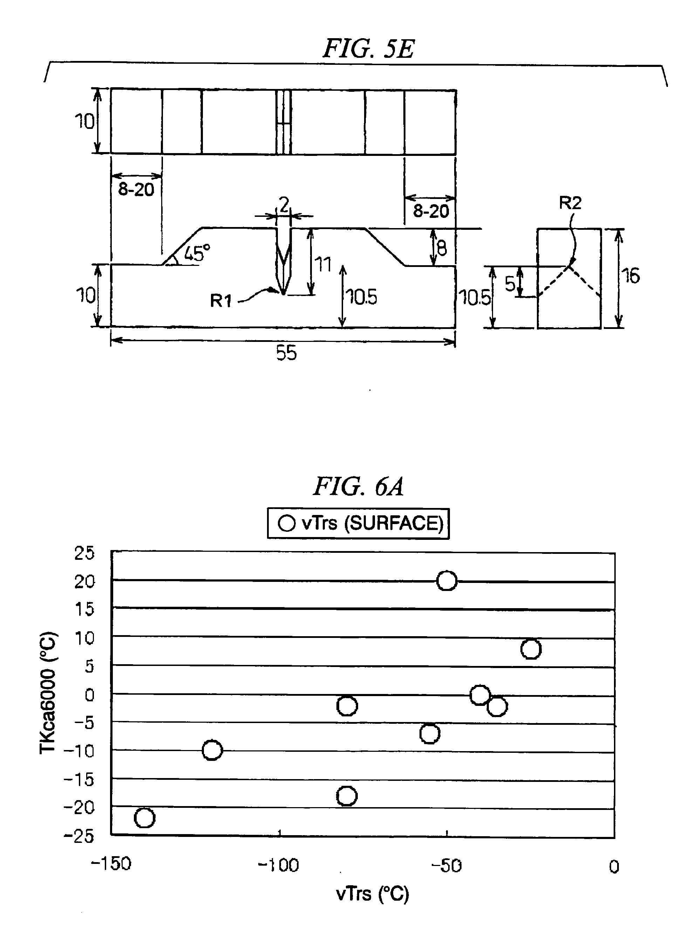

The very suitable shapes of a test piece are shown in FIGS. 5A to 5E. Those figures show representative shapes of, a drop weight test piece in FIG. 5A, a V-notch Charpy impact test piece in FIG. 5B, a (one-face) sharp-notch Charpy impact test piece in FIG. 5C, a three-face sharp-notch Charpy impact test piece in FIG. 5D, and a chevron-notch Charpy impact test piece in FIG. 5E.

When the method according to this embodiment uses the drop weight test as the surface small-scale test, it is possible to directly evaluate the brittle crack propagation characteristic of the outermost surface of a steel plate. Accordingly, it is possible to evaluate the arrestability of the steel plate with high accuracy, compared with the case where the surface small-scale test is performed using a different method such as a V-notch Charpy impact test.

Since the V-notch Charpy impact test has a condition where a brittle crack is generated relatively less frequently, the brittle crack generation characteristic may be dominant in the test result thereof. On the contrary, when a small-scale-test-piece in which a brittle crack is easily generated is used in the small-scale test, the brittle crack propagation characteristic may be evidently reflected in the small-scale test result.

Therefore, it is preferable that a test method using a small-scale-test-piece designed to cause a brittle crack to be easily generated is employed. Further preferably, for example, the chevron-notch Charpy impact test can be performed using a test piece in which a notched portion is formed in the form of a slit and the shape of a notch is a chevron shape.

For the size of the chevron-notch Charpy impact test piece (see FIG. 5E), it is preferable that, as long as it has approximately 10 mm measured in the thickness direction and is within the condition in this embodiment, the area of a brittle crack propagating zone is increased, in order to observe the correlation with a large-scale test of testing the brittle crack propagation arrestability of a steel plate with a thickness of 50 mm or more. In FIG. 5E, it is preferable that the angle formed by a valley part of the notch represented by R1 is smaller than 60 degrees and the radius of curvature of the bottom of the notch is in the range of 0.1 to 0.2 mm. The notch extends in the width direction of the test piece and is formed in such a bent shape and form a mountain in the front view (a view along the longitudinal direction of the test piece). The peak of the mountain (R2 in FIG. 5E) serves as a point where a crack is generated during the test. It is preferable that the notch is bent at the vertex R2 and the radius of curvature of the curve is in the range of 0.1 to 0.2 mm. The height of the R2 part from the bottom of the test piece is preferably 10.5 mm.

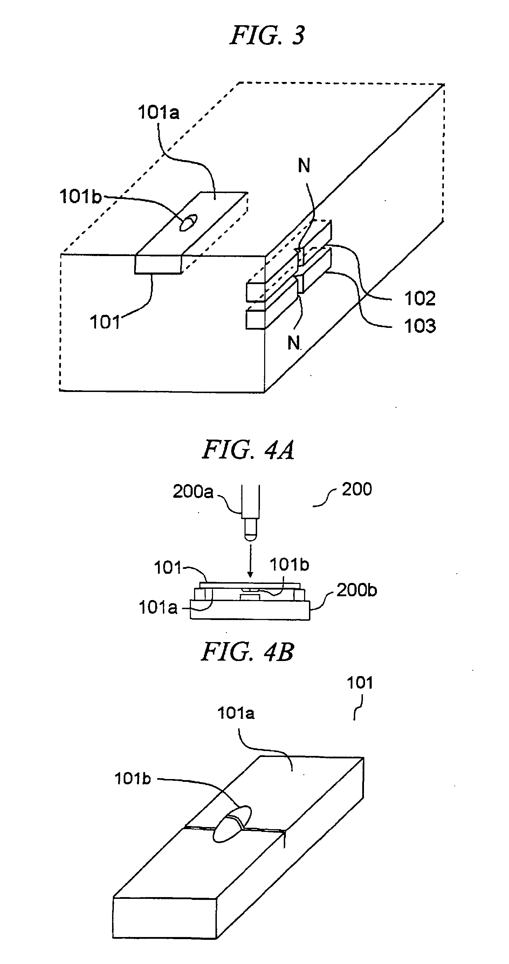

In the drop weight test, as shown in FIG. 5A, a weld portion (weld bead represented by 101b in FIG. 3) is formed on the surface of the test piece and a notch (a crack starter weld, a machined slit) is formed in the weld portion. The drop weight test piece 101 is sampled so as to include the surface part of a steel plate as shown in FIG. 3. That is, the drop weight test piece 101 is sampled so that one surface 101a of the drop weight test piece 101 corresponds to the front surface of the steel plate. As schematically illustrated in FIG. 3, the weld bead 101b is formed on the front surface 101a.

An NRL (Naval Research Laboratory) drop weight test defined in E208-06 of the ASTM (Standards of American Society for Testing and Materials) is performed using the sampled test piece 101. On one surface 101 a of the test piece 101, the weld bead 101b with a size of 64 mm in the length direction is formed using welding material based on the above-mentioned definition (FIG. 5A). This bead serves as a crack starter weld. A slit with a width of 1.5 mm or less is further formed in the weld bead 101b.

Next, as shown in FIG. 4A, the drop weight test piece 101 is set on a test piece setting platform 200b of the drop weight testing equipment 200. At this time, the test piece is set so that the surface 101a having the weld bead 101b formed thereon is faced down. In the drop weight test, a weight 200a having a prescribed shape and mass is dropped onto the test piece 101. When the toughness of the steel material of the test piece 101 is low, a brittle crack generated from the slit of the weld bead propagates in the test piece 101 depending on the conditions such as the test temperature.

When the crack started from the slit propagates on the surface 101a of the test piece in the width direction of the test piece 101 and reaches the ends thereof (the state shown in FIG. 4B), the test result is determined as Break (crack propagation occurred). When the crack does not reach the ends in the width direction, the test result is determined as No break (no crack propagation). This test operation is repeatedly performed on two test pieces while changing the temperature of the test piece at intervals of 5°C, and an NDT temperature is defined as the temperature lower by 5°C than the lowest temperature at which the test results of two test pieces are both determined to be "no break".

A crack may propagate through the test piece up to the opposite surface of the weld bead forming surface 101a, but this through-propagation is not included in the evaluation used in the present embodiment.

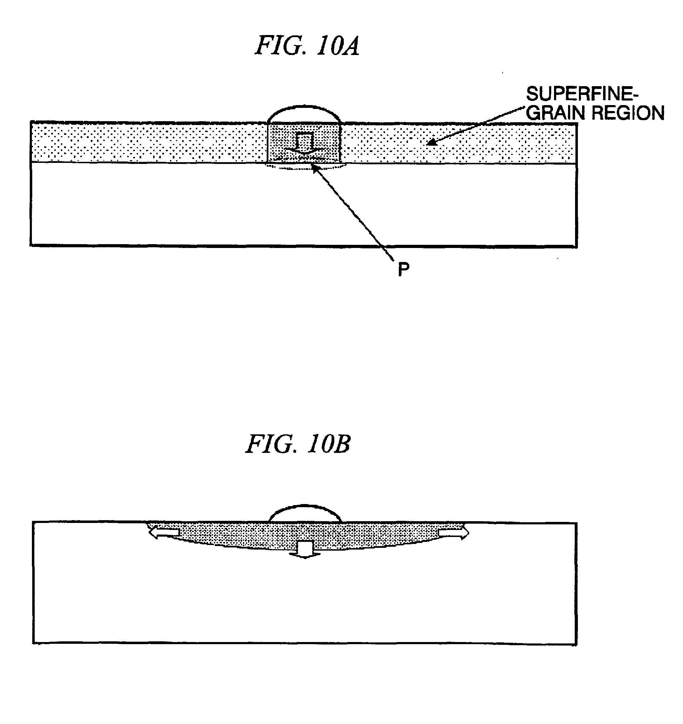

As an example where the NDT temperature in the drop weight test is used for a simple evaluation of an arrest toughness value Kca, a case is known in which the NDT temperature is used for a fracture test of a special steel plate of ultra-fine-grain surface steel (Non-patent document 2). In the ultra-fine-grain surface steel plate, a layer which has an almost uniform ultra-fine-grain tissue and which is hardly subjected to a brittle fracture is present in the surface part thereof. In Non-patent document 2, a drop weight test is used for evaluation of the ultra-fine-grain surface steel plate. However, in this document, test conditions, correlating equations, and the like are optimized so that the major evaluation criterion is whether a brittle crack generated in the drop weight test reaches the rear surface through the ultra-fine-grain surface steel plate. Accordingly, the use of the overall test, the result analysis, the correlating equation, and the like is greatly different from the general use of the drop weight test based on the ASTM. That is, in Non-patent document 2, although it is possible to obtain a special correlating equation dedicated to the evaluation of characteristics of the ultra-fine-grain surface layer, it is difficult to use the test conditions such as the correlating equation for a general steel material. Additionally, in the test disclosed in Non-patent document 2, the propagation of a crack along the bead forming surface does not directly and crucially affect the test result. This is because a special kind of propagation occurs in the ultra-fine-grain surface steel plate, in which a crack passes through the ultra-fine-grain surface part in the vertical direction and then the crack propagates inside (under) than the ultra-fine-grain surface part. FIG. 10A shows the behavior of the fracture face in the drop weight test of the ultra-fine-grain surface steel and FIG. 10B shows the behavior of the fracture face in the drop weight test of a general steel material. In the drop weight test of the ultra-fine-grain surface steel, a brittle crack passes through the surface part including the ultra-fine-grain tissue and the test piece is wholly fractured when the brittle crack reaches the region P in FIG 10A. When the crack does not reach the region P, the crack is arrested. That is, when the crack reaches the substantial boundary of the ultra-fine-grain region, it is determined as 'Go' (propagation). That is, the drop weight test of the ultra-fine-grain surface steel is the same as the test of evaluating only the surface part including the ultra-fine-grain tissue. On the other hand, in the drop weight test of a general steel material, the brittle crack propagates in both directions (the arrow direction in FIG. 10B) of the thickness direction and the width direction of the test piece, and it is determined as Break (crack propagation done) by the through-propagation in the width direction. In this way, the drop weight test of a general steel material is greatly different from the drop weight test of the ultra-fine-grain surface steel, in that the brittle crack propagation characteristic parallel to the plate surface in the vicinity of the plate surface is evaluated. Accordingly, the test method disclosed in Non-patent document 2 uses conditions which can be applied only to the ultra-fine-grain surface steel and is not applicable to the test of a general steel material.

In Non-patent document 2, the inner region in thickness is also evaluated in the drop weight test. The main mechanism of causing the inner region in thickness to contribute to the arrestability is not the energy of the shear-lip but the energy of the brittle crack propagation resistance. Accordingly, it is thought that the evaluation of the inner test piece through the drop weight test causes an evaluation error due to a difference in rigidity based on the manufacturing batches and the manufacturing methods of test steel. In such steel plates, since the contribution of the ultra-fine-grain surface zone to the arrestability is excessively great, the error is not significant and the method may be used in practice. Accordingly, the evaluating equation cannot be applied to a general steel material.

On the other hand, regarding the evaluation of a surface layer in thickness of a general steel material, it is important that different suitable methods are separately used for the evaluation of the outermost surface and the evaluation of the inner region. In steel plates with wide varieties of processing conditions and compositions, the inventors found that the NDT temperature of the drop weight test defined in the ASTM is preferably used in the evaluation of the outermost surface. In the drop weight test used in this embodiment, whether a crack reaches the opposite surface layer of the test piece is not included in the evaluation. This drop weight test is a test method in which the contribution of the surface layer is the greatest and the contribution of the opposite surface is the smallest and is suitable for the evaluation of a shear-lip effect of the surface layer of a steel material.

This embodiment relates to a performance inspecting method of inspecting the arrestability of a steel plate. Therefore, any methods of estimating the arrestability, which is the total characteristics over the thickness direction, using the above-mentioned technique to guarantee the performance may be included in the technical scope of this embodiment. The scope of the invention is determined by the appended claims.

This embodiment has as a basic idea to estimate the arrestability of a steel plate based on the results of a small-scale test, and the characteristics based on the component compositions appears in the test result. Accordingly, it is possible to apply the method according to this embodiment to a steel plate with a wide range of component compositions. The steel plate used in this embodiment may be formed of steel for a welded structure with a known component composition. That is, the steel plate used in this embodiment may be a steel plate with a known component composition.

As the steel for a welded structure, a steel plate having basic composition of, in mass%, 0.02 to 0.20% of C, 0.01 to 1.0% of Si, 0.3 to 2.0% of Mn, 0.001 to 0.20% of Al, 0.02% or less of N, 0.01 % or less of P, and 0.01 % or less of S and including one or more of Ni, Cr, Mo, Cu, W, Co, V, Nb, Ti, Zr, Ta, Hf, REM, Y, Ca, Mg, Te, Se, and B may be used.

Plural small-scale tests (composite small-scale tests) are performed on small-scale-test-pieces sampled from plural positions of the above-mentioned various standard steel plates using the above-mentioned method. The correlation model between the results of the composite small-scale tests and the result of the large-scale test for various standard steel plates performed first is calculated as follows. The goal of this correlation model is to estimate the brittle crack propagation arrestability that can be obtained through a large-scale test, from the composite small-scale tests.

The correlation model used in this embodiment is based on a linear weighted average of the results of the plural small-scale tests. The specific correlating equation is expressed by the following Expression 1, where:

Y is the NDT temperature that is the result of a drop weight test of a surface-small-scale-test-piece;

X1 is the fracture appearance transition temperature or the absorbed energy transition temperature which is the result of a small-scale test using an inner-small-scale-test-piece;

a, b, and d are coefficients; and

TKca is the target Kca critical temperature.

Expression 1

$$a \cdot Y + b \cdot X1 + d = TKca \quad ...(1)$$

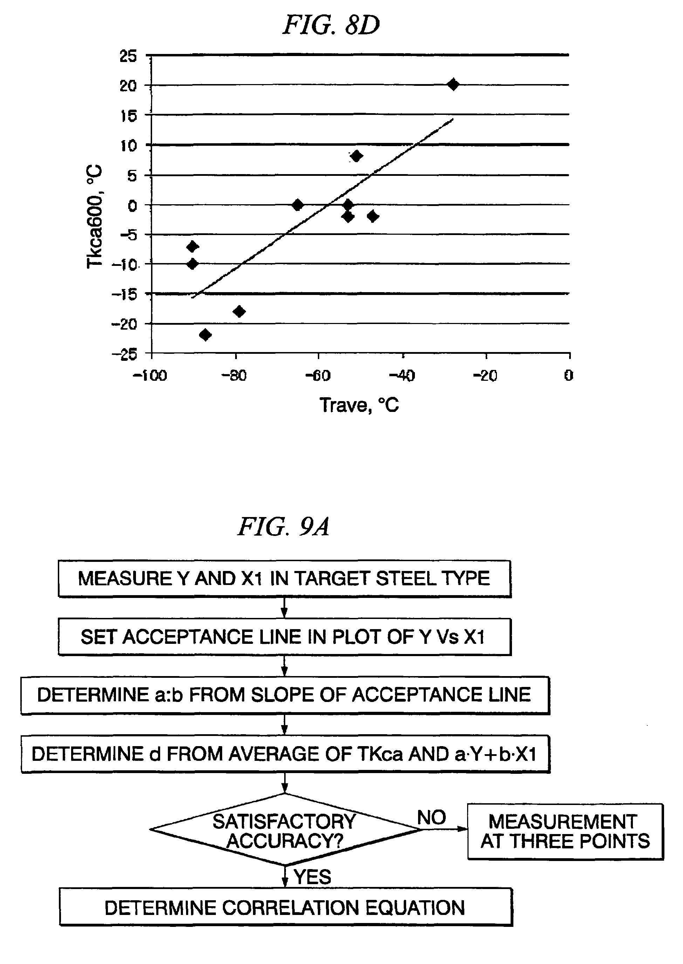

FIG. 9A is a flowchart illustrating the method of calculating the coefficients (a, b, and d) of the estimating equation. First, the slope of a linear line, that is, the ratio of a to b, is calculated from an acceptance determining criterion. Then, the correlating equation is determined by comparing $Y + aX / b$ and TKca using the calculated ratio. At this point, if the accuracy is not sufficient, a small-scale test at a third position is used, and the proportion a to b is changed, and then the above-mentioned procedure is performed to minimize an error.

The coefficients of the correlation model are determined using a few standard steel plates using the above-mentioned method. When the correlation model is completed by the determination of the coefficients, screening is performed on more steel plate specimens in a production line. Any number of steel plate specimens from the production line is acquired, and a surface-small-scale-test-piece (for the drop weight test) and inner-small-scale-test-pieces (for measurement of the brittle fracture percentage or the absorbed energy) are acquired from each steel plate specimen. Similarly to the standard steel plate, the small-scale tests are performed on the small-scale-test-pieces and the composite small-scale test results (the surface small-scale test result Y' and the inner small-scale test result X1') of the steel plate specimen are obtained. By substituting Y' and X1' into Expression 1, which is the correlating equation obtained above, TKca' that is an estimated value of the target Kca critical temperature of the steel plate specimen is calculated.

TKca, which is the measured target Kca critical temperature (ESSO test result) of the standard steel plate, is compared with TKca' and when TKca' ≤ TKca, it is determined that the brittle crack propagation arrestability of the steel plate specimen is good.

Since the large-scale test of the steel plate specimen can be omitted in this determination, it is possible to simply and easily estimate the brittle crack propagation arrestability of plural steel plate specimens with high accuracy.

(Second Embodiment)

Hereinafter, a method of determining brittle crack propagation arrestability of a high-strength steel plate according to a second embodiment of the present invention will be described. This embodiment is different from the first embodiment, in that the inner-small-scale-test-piece used in the inner small-scale test is sampled from two regions in the steel plate so as to determine the brittle crack propagation arrestability with higher accuracy. In the method according to the second embodiment, the surface-small-scale-test-piece is sampled from the position 12 shown in FIG. 2B, as in the first embodiment. The inner-small-scale-test-pieces are sampled from both two positions 9a and 11 shown in FIG. 2B. The drop weight test is performed as the surface small-scale test, as in the first embodiment. The V-notch Charpy impact test or the chevron-notch Charpy impact test are performed as the inner small-scale tests using two inner-small-scale-test-pieces. By calculating a weighted-average of the results of three small-scale tests, the brittle crack propagation arrestability of the steel plate is estimated.

The correlation model used in this embodiment is expressed by Expression 2, where:

Y is the NDT temperature which is the result of the drop weight test using a surface-small-scale-test-piece;
X1 is the fracture appearance transition temperature or the absorbed energy transition temperature which is the result of the small-scale test using a first inner-small-scale-test-piece;
X2 is the fracture appearance transition temperature or the absorbed energy transition temperature which is the result of the small-scale test using a second inner-small-scale-test-piece;
a, b, c, and d are coefficients; and
TKca is the target Kca critical temperature.

Expression 2

$$a \cdot Y + b \cdot X1 + c \cdot X2 + d = TKca \quad \ldots (2)$$

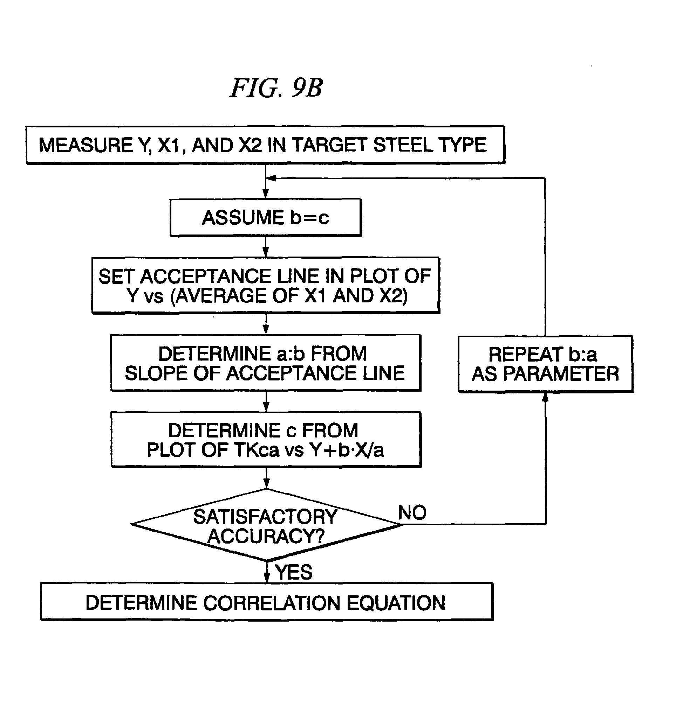

The method of calculating the coefficients is as in the first embodiment and is performed following the flowchart shown in FIG. 9B.

After the coefficients are determined, steel plate specimens are sampled from a production line and composite small-scale tests are performed on the steel plate specimens as in the first embodiment. In this embodiment, three test pieces of the surface-small-scale-test-piece, the first inner-small-scale-test-piece (from the position 9a in FIG. 2B), and the second inner-small-scale-test-piece (from the position 11 in FIG. 2B) are acquired from each steel plate specimen. The drop weight test is performed on the surface-small-scale-test-piece, the V-notch Charpy impact test or the chevron-notch Charpy impact test is performed on the first and second inner-small-scale-test-pieces, and the results of the composite small-scale tests are obtained. By substituting Y', X1', and X2' which are the results of the composite small-scale tests of each steel plate specimen into Expression 2 which is the correlation model obtained above, TKca', i.e., an estimated value of the target Kca critical temperature of the corresponding steel plate specimen, is calculated.

Then the TKca' is compared with TKca, i.e., the measured target Kca critical temperature of the standard steel plate, and when TKca'$\leq$ TKca, it is determined that the brittle crack propagation arrestability of the steel plate specimen is good.

Examples

Examples of the embodiments of the present invention will be described below. The conditions of the examples are employed to check the feasibility and effect of the invention. The applicable scope of the invention is not limited to any one example condition thereof. The invention can employ various conditions as long as the goal of the invention is accomplished without departing from the concept of the invention.

Example 1

The component compositions of steel plates used in this example is shown in Table 1. Main rolling conditions, cooling conditions, heating conditions, thicknesses, yield strengths YS, and the like in manufacturing the steel plates are shown in Table 2. From those steel plates with a thickness of 70 mm, small-scale-test-pieces were sampled using the sampling technique shown in FIG. 2B. The types of the small-scale tests performed on the steel plate specimens and the sampling positions of the small-scale-test-pieces are shown in Table 3, which will be described later.

[Table 1]

| | C (%) | Si (%) | Mn (%) | P (%) | S (%) | A1 (%) | B (ppm) | Cu (%) | Ni (%) | Nb (%) | V (%) | Ti (%) | Mg (ppm) |
|---|---|---|---|---|---|---|---|---|---|---|---|---|---|
| Steel 1 | 0.09 | 0.05 | 1.62 | 0.008 | 0.003 | 0.031 | 10 | 0.3 | 0.3 | 0.0012 | 0.039 | 0.01 | - |
| Steel 2 | 0.091 | 0.05 | 1.57 | 0.004 | 0.002 | 0.027 | 10 | 0.35 | 0.71 | 0.01 | - | 0.012 | 18 |
| Steel 3 | | | | | | | | | | | | | |
| Steel 4 | 0.12 | 0.2 | 1.42 | 0.004 | 0.002 | 0.027 | 10 | 0.1 | 0.1 | 0.02 | - | 0.012 | - |
| Steel 5 | | | | | | | | | | | | | |

(continued)

|  | C (%) | Si (%) | Mn (%) | P (%) | S (%) | A1 (%) | B (ppm) | Cu (%) | Ni (%) | Nb (%) | V (%) | Ti (%) | Mg (ppm) |
|---|---|---|---|---|---|---|---|---|---|---|---|---|---|
| Steel 6 | 0.085 | 0.06 | 1.58 | 0.005 | 0.002 | 0.025 | 9 | 0.28 | 0.29 | 0.01 | 0.02 | 0.01 | 18 |
| Steel 7 | | | | | | | | | | | | | |
| Steel 8 | 0.095 | 0.15 | 1.41 | 0.005 | 0.002 | 0.025 | 9 | 0.2 | 0.18 | 0.01 | - | 0.01 | - |
| Steel 9 | 0.095 | 0.15 | 1.61 | 0.004 | 0.002 | 0.027 | 9 | - | - | 0.03 | - | 0.01 | - |
| Steel 10 | | | | | | | | | | | | | |

[Table 2]

| Steel plate No. | Rolling end temperature (°C) | Water-cooling start temperature after rolling (°C) | Heat treatment after rolling | Thickness (mm) | YS (MPa) |
|---|---|---|---|---|---|
| Steel 1 | 870 | 860 | None | 70 | 440 |
| Steel 2 | 810 | 805 | 550°C×1hr | 70 | 470 |
| Steel 3 | 810 | 800 | 500°C×1hr | 70 | 490 |
| Steel 4 | 920 | 850 | None | 70 | 500 |
| Steel 5 | 865 | 910 | 570°C×0.5hr | 70 | 490 |
| Steel 6 | 880 | 870 | None | 70 | 460 |
| Steel 7 | 910 | 900 | None | 70 | 470 |
| Steel 8 | 950 | 920 | 500°C×0.5hr | 70 | 450 |
| Steel 9 | 760 | 750 | 500°C×1hr | 70 | 490 |
| Steel 10 | 700 | 690 | None | 70 | 500 |

The result of the V-notch Charpy impact test is expressed by a temperature vTrs representing a temperature called a ductile and brittle fracture appearance transition temperature, in which 50% brittle fracture percentage is obtained. The results of the chevron-notch Charpy impact tests are shown by transition temperatures at which the absorbed energy of 70 J can be obtained. The result of the sharp-notch Charpy impact tests are shown by a transition temperature at which the absorbed energy of 40 J can be obtained.

The correlation between the small-scale test results and the arrestability Kca measured in the large-scale test performed on the respective steel plates will be described. The small-scale tests were performed using the method according to this embodiment and the method according to a comparative example.

FIGS. 6A to 6E show the results according to the comparative examples and are diagrams illustrating the correlations between the small-scale tests using only the V-notch Charpy impact test and the arrestability measured in the large-scale test. The test pieces sampled from various positions were used in the small-scale tests.

The V-notch Charpy impact test piece (with a test piece thickness of 10 mm) is a standard test piece defined in the JIS (see FIG. 5B).

FIG. 6A is a correlation diagram when either one of the small-scale-test-piece 10a and the small-scale-test-piece 11 shown in FIG. 2B was used.

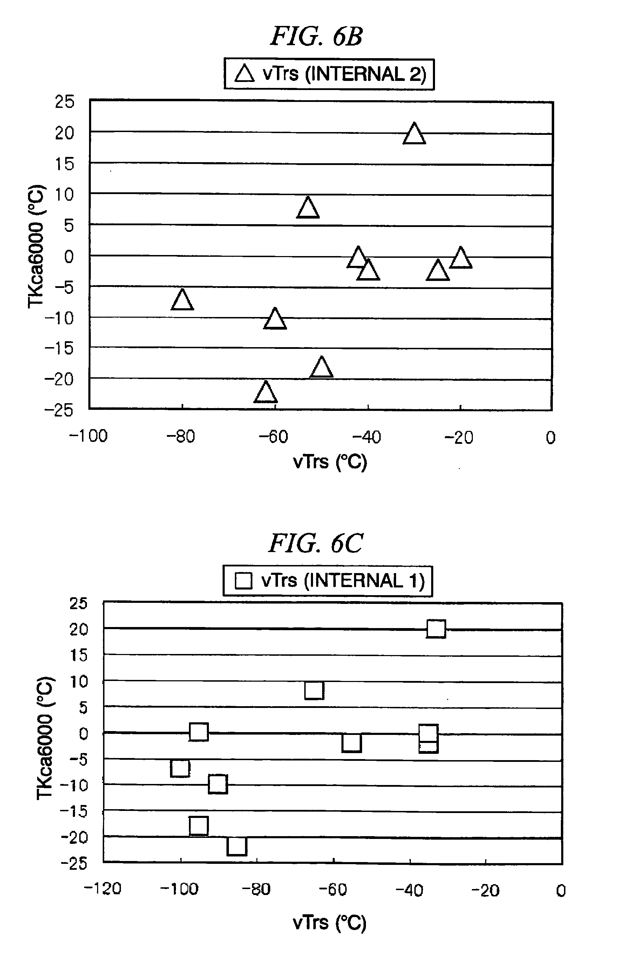

FIG. 6B is a correlation diagram when the small-scale-test-piece 8a shown in FIG 2B was used.

FIG. 6C is a correlation diagram when the small-scale-test-piece 9a shown in FIG. 2B was used.

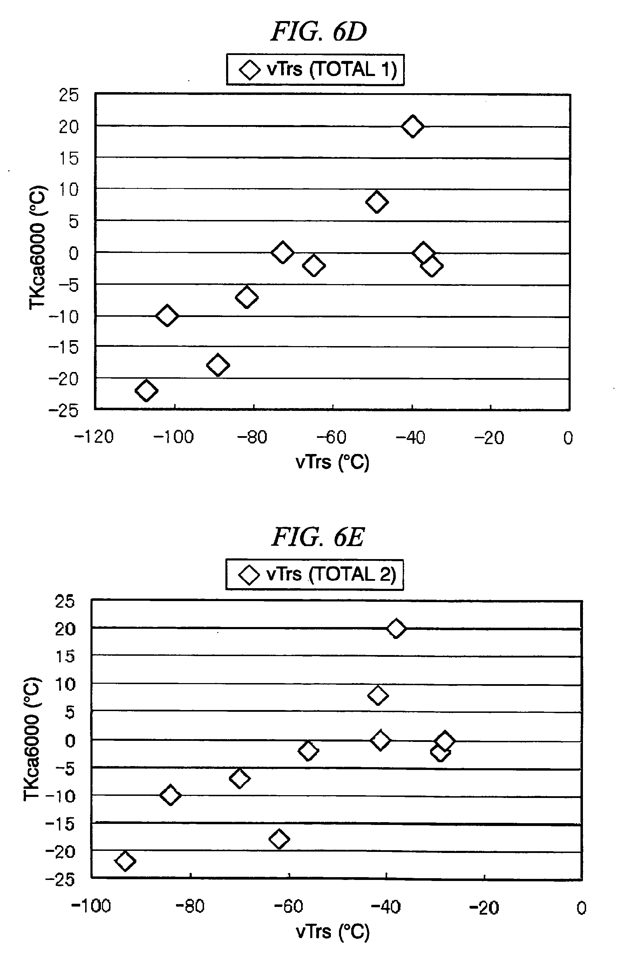

FIG. 6D is a correlation diagram when both the small-scale-test-pieces 10a and 9a shown in FIG. 2B were used and the weighted-average of the obtained small-scale test results was calculated.

FIG. 6E is a correlation diagram when both the small-scale-test-pieces 10a and 8a shown in FIG. 2B were used and the weighted-average of the obtained small-scale test results was calculated.

The weighted-average is calculated by multiplying the surface test result by 0.4, multiplying the inner test result by 0.6, and adding the results. The procedure of calculating the weighting factors will be described later.

The correlations, which were greatly non-uniform in the correlations shown in FIGS. 6A, 6B, and 6C, were slightly improved in FIG. 6D. The correlation in FIG. 6E in which the test piece 8a affected by the central segregation is more non-uniform than that in FIG. 6D. However, in order to guarantee the arrestability using only the small-scale-test-pieces in a delivery test, it is preferable to further improve the correlation in FIG. 6D.

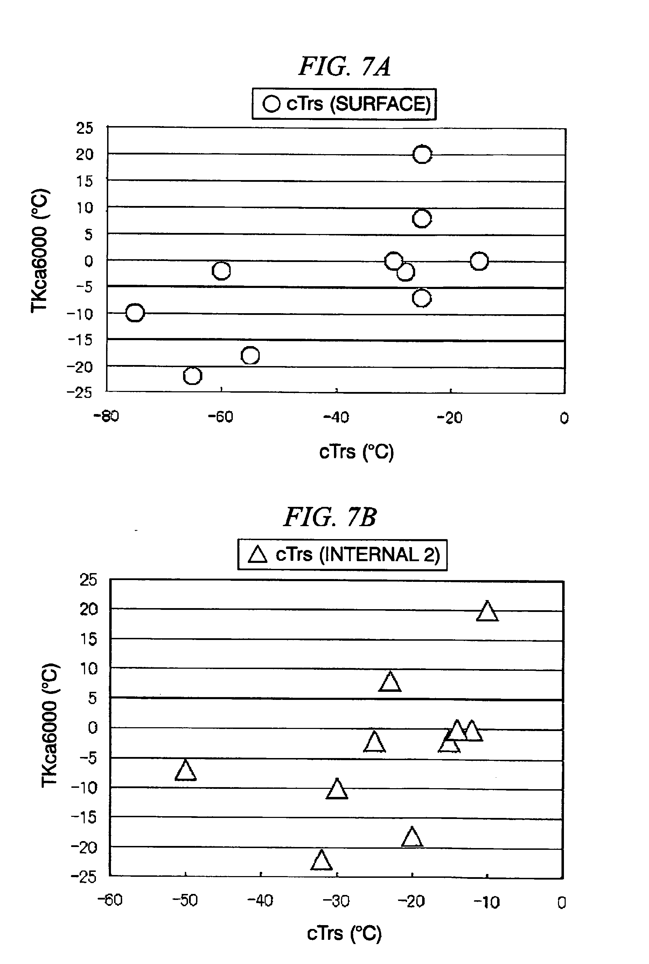

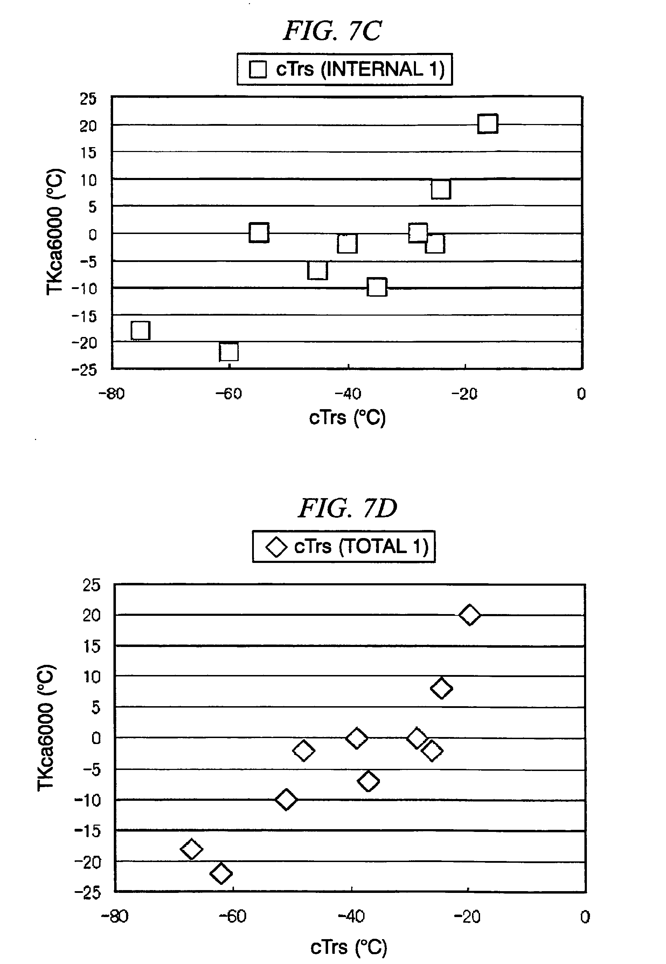

FIGS. 7A to 7E are results on ten types of steel plates with a thickness of 70 mm, showing the correlations of the results of the small-scale tests, by sampling only the chevron-notch Charpy impact test pieces as the small-scale-test-pieces, with the arrestability measured in the large-scale test.

The specific shape and size (unit: mm) of the chevron-notch Charpy impact test pieces (with a test piece thickness of 10 mm) are shown in FIG. 5E.

The sampling positions of the small-scale-test-pieces and the result analysis were the same as in the case of FIGS. 6A to 6E, except that the shape of the small-scale-test-pieces and the small-scale test method were different.

Since the contribution of the brittle crack generation characteristic becomes smaller by employing the chevron-notch Charpy impact test, the correlation shown in FIG. 7D was slightly improved, compared with the correlation shown in FIG. 6D.

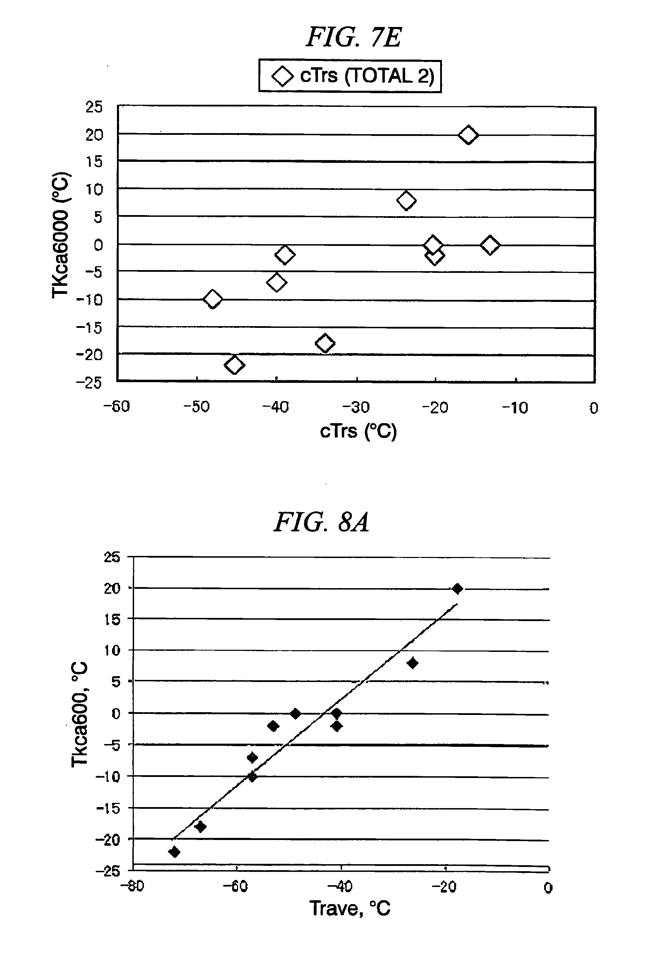

The correlation when the test piece 8a shown in FIG. 2B was used is shown in FIG. 7E. Since the small-scale-test-piece 8a including the central segregation was used, the correlation of the chevron-notch Charpy impact test piece was not as good, compared with the correlation shown in FIG. 7D.

Although the detailed result is not described, the contribution of the brittle crack generation characteristic was reduced even in the sharp-notch Charpy impact test piece, as in the chevron-notch Charpy impact test piece. Accordingly, the tendency that the correlation is better than that in the V-notch Charpy impact test piece can be observed.

The specific shape and size (unit: mm) of the one-face sharp-notch Charpy impact test pieces (with a test piece thickness of 10 mm) are shown in FIG. 5C. The three-face sharp-notch Charpy impact test pieces (FIG. 5D) in which a sharp notch is formed in three faces of a test material may also be used.

The Kca value of the steel plate is estimated from the correlation between the test results of the small-scale-test-pieces according to the comparative examples shown in FIGS. 6A to 6E and FIGS. 7A to 7E and the temperature TKca6000 (°C) at which the Kca value measured in the large-scale test is 6000 $N/mm^{1.5}$. The estimated results are shown in Table 3. TKca6000 measured in the large-scale test is also shown in Table 3.

[Table 3]

| | No. | Steel plate No. | TKca600 measured in large-sca1c test (°C) | Small-scale test 1 | | | Small-scale test 2 | | | Tkca600 estimated from small-scale test result (°C) | Difference between measured value and estimated value |
|---|---|---|---|---|---|---|---|---|---|---|---|
| | | | | Type | Sampling position | Result | Type | Sampling position | Result | | |
| | | | | | | | | | | | |
| Comparative Example VNC | 1 | Steel 1 | -18 | VNC | 10a | -80 | VNC | 9a | -95 | -10 | -8 |
| | 2 | Steel 2 | -10 | VNC | 10a | -120 | VNC | 9a | -90 | -15 | 5 |
| | 3 | Steel 3 | -22 | VNC | 10a | -140 | VNC | 9a | -85 | -17 | -5 |
| | 4 | Steel 4 | 0 | VNC | 11 | -40 | VNC | 9a | -95 | -5 | 5 |
| | 5 | Steel 5 | -2 | VNC | 11 | -80 | VNC | 9a | -55 | -2 | 0 |
| | 6 | Steel 6 | -7 | VNC | 10a | -55 | VNC | 9a | -100 | -8 | 1 |
| | 7 | Steel 7 | 8 | VNC | 11 | -25 | VNC | 9a | -65 | 4 | 4 |
| | 8 | Steel 8 | 20 | VNC | 11 | -50 | VNC | 9a | -33 | 7 | 13 |
| | 9 | Steel 9 | -2 | VNC | 11 | -35 | VNC | 9a | -35 | 8 | -10 |
| | 10 | steel 10 | 0 | VNC | 11 | -40 | VNC | 9a | -35 | 8 | -8 |
| Comparative Examples CNC | 11 | steel 1 | -18 | CNC | 10a | -55 | CNC | 9a | -75 | -21 | 3 |
| | 12 | Steel 2 | -10 | CNC | 10a | -75 | CNC | 9a | -35 | -10 | 0 |
| | 13 | Steel 3 | -22 | CNC | 10a | -65 | CNC | 9a | -60 | -18 | -4 |
| | 14 | Steel 4 | 0 | CNC | 11 | -15 | CNC | 9a | -55 | -2 | 2 |
| | 15 | Steel 5 | -2 | CNC | 11 | -60 | CNC | 9a | -40 | -8 | 6 |
| | 16 | Steel 6 | -7 | CNC | 10a | -25 | CNC | 9a | -45 | -1 | -6 |
| | 17 | Steel 7 | 8 | CNC | 11 | -25 | CNC | 9a | -24 | 7 | 1 |
| | 18 | Steel 8 | 20 | CNC | 11 | -25 | CNC | 9a | -16 | 10 | 10 |
| | 19 | Steel 9 | -2 | CNC | 11 | -28 | CNC | 9a | -25 | 6 | -8 |
| | 20 | Steel 10 | 10 | CNC | 11 | -30 | CNC | 9a | -28 | 4 | -4 |

(continued)

| | No. | Steel plate No. | TKca600 measured in large-sca1c test (°C) | Small-scale test 1 | | | Small-scale test 2 | | | Tkca600 estimated from small-scale test result (°C) | Difference between measured value and estimated value |
|---|---|---|---|---|---|---|---|---|---|---|---|
| | | | | Type | Sampling position | Result | Type | Sampling position | Result | | |
| Inventive Example CNC1 | 21 | Steel 1 | -18 | NDT | 12 | -55 | CNC | 9a | -75 | -16 | -2 |
| | 22 | Steel 2 | -10 | NDT | 12 | -90 | CNC | 9a | -35 | -10 | 0 |
| | 23 | Steel 3 | -22 | NDT | 12 | -90 | CNC | 9a | -60 | -20 | -2 |
| | 24 | Steel 4 | 0 | NDT | 12 | -20 | CNC | 9a | -55 | 2 | -2 |
| | 25 | Steel 5 | -2 | NDT | 12 | -50 | CNC | 9a | -55 | -7 | 5 |
| | 26 | Steel 6 | -7 | NDT | 12 | -75 | CNC | 9a | -45 | -10 | 3 |
| | 27 | Steel 7 | 8 | NDT | 12 | -30 | CNC | 9a | -24 | 12 | -4 |
| | 28 | Steel 8 | 20 | NDT | 12 | -20 | CNC | 9a | -16 | 18 | 2 |
| | 29 | Steel 9 | -2 | NDT | 12 | -65 | CNC | 9a | -25 | 2 | -4 |
| | 30 | Steel 10 | 0 | NDT | 12 | -80 | CNC | 9a | -28 | -4 | 4 |
| Comparative Example 8a | 31 | Steel 1 | -18 | VNC | 10a | -80 | VNC | 8a | -50 | -6 | -12 |
| | 32 | Steel 2 | -10 | VNC | 10a | -120 | VNC | 8a | -60 | -14 | 4 |
| | 33 | Steel 3 | -22 | - | - | - | VNC | 8a | -62 | -9 | -13 |
| | 34 | Steel 4 | 0 | VNC | 11 | -40 | VNC | 8a | -42 | 8 | -8 |
| | 35 | Steel 5 | -2 | - | - | - | VNC | 8a | -55 | 6 | -8 |
| | 36 | Steel 6 | -7 | - | - | - | VNC | 8a | -80 | -18 | 11 |
| | 37 | Steel 7 | 8 | - | - | - | VNC | 8a | -53 | -3 | 11 |
| | 38 | Steel 8 | 20 | VNC | 10a | -55 | VNC | 8a | - | -2 | 22 |
| | 39 | Steel 9 | -2 | VNC | 10a | -25 | VNC | 8a | -25 | 7 | -9 |
| | 40 | Steel 10 | 0 | VNC | 10a | -50 | VNC | 8a | -20 | 7 | -7 |

| | No. | Steel plate No. | TKca600 measured in large-scalc test (°C) | Small-scale test 1 | | | Small-scale test 2 | | | Tkca600 estimated from small-scale test result (°C) | Difference between measured value and estimated value |
|---|---|---|---|---|---|---|---|---|---|---|---|
| | | | | Type | Sampling position | Result | Type | Sampling position | Result | | |
| Comparative Example NDT | 41 | Steel 7 | 8 | NDT | 12 | -30 | NDT | 8a | -30 | 13 | -5 |
| | 42 | Steel 8 | 20 | NDT | 12 | -20 | NDT | 8a | -25 | 18 | 2 |
| | 43 | Steel 9 | -2 | NDT | 12 | -65 | NDT | 8a | -20 | 7 | -9 |
| | 44 | Steel 10 | 0 | NDT | 12 | -80 | NDT | 8a | -15 | 5 | -5 |
| | 45 | Steel 7 | 8 | NDT | 12 | -30 | NDT | 9a | -45 | 6 | 2 |
| | 46 | Steel 8 | 20 | NDT | 12 | -20 | NDT | 9a | -45 | 9 | 11 |
| | 47 | Steel 9 | -2 | NDT | 12 | -65 | NDT | 9a | -30 | 2 | -4 |
| | 48 | Steel 10 | 0 | NDT | 12 | -80 | NDT | 9a | -35 | -4 | 4 |
| Inventive Example VNC | 49 | steel 1 | -18 | NDT | 12 | -55 | VNC | 9a | -95 | -10 | -8 |
| | 50 | Steel 2 | -10 | NDT | 12 | -90 | VNC | 9a | -90 | -16 | 6 |
| | 51 | Steel 3 | -22 | NDT | 12 | -90 | VNC | 9a | -85 | -14 | -8 |
| | 52 | Steel 4 | 0 | NDT | 12 | -20 | VNC | 9a | -95 | -4 | 4 |
| | 53 | Steel 5 | -2 | NDT | 12 | -50 | VNC | 9a | -55 | 2 | -4 |
| | 54 | Steel 6 | -7 | NDT | 12 | -75 | VNC | 9a | -100 | -16 | 9 |
| | 55 | Steel 7 | 8 | NDT | 12 | -30 | VNC | 9a | -65 | 3 | 5 |
| | 56 | Steel 8 | 20 | NDT | 12 | -20 | VNC | 9a | -33 | 14 | 6 |
| | 57 | Steel 9 | -2 | NDT | 12 | -65 | VNC | 9a | -35 | 5 | -7 |
| | 58 | Steel 10 | 0 | NDT | 12 | -80 | VNC | 9a | -35 | 2 | -2 |

EP 2 508 866 B1

In Table 3, VNC represents the V-notch Charpy impact test piece, CNC represents the chevron-notch Charpy impact test piece, and NDT represents the drop weight test piece defined in the ASTM. The specific shape and size (unit: mm) are shown in FIG 5A.

In the comparative example VNC, the V-notch Charpy impact test was used in both the surface small-scale test and the inner small-scale test.

In the comparative example CNC, the chevron-notch Charpy impact test was used in both the surface small-scale test and the inner small-scale test.

In the comparative example NDT, the drop weight test was used in both the surface small-scale test and the inner small-scale test.

In the comparative example 8a, the V-notch Charpy impact test was used in both the surface small-scale test and the inner small-scale test. In the comparative example 8a, the test piece of the inner small-scale test was sampled from the position 8a, in contrast with the other examples, in which the test piece of the inner small-scale test were sampled from the position 9a.

In the inventive example CNC1, the drop weight test was used in the surface small-scale test and the chevron-notch Charpy impact test piece was used in the inner small-scale test.

In the comparative examples VNC and CNC, the small-scale test and the large-scale test were greatly different depending on the steel types, and in some types of steel, satisfactory accurate estimated values could not be obtained.

In the comparative example 8a, the result of the small-scale test based on the sampling position 8a including the central segregation part was used, resulting in an increase of the estimation error. In the comparative example NDT, the evaluation method relating to a surface ultra-fine-grain steel described in Non-patent document 2 was applied. However, it was shown that the method of evaluating a test piece including the central part of a general steel material using the drop weight test resulted in a low accuracy. In the inventive example CNC1, it was observed that the difference between the value estimated through the small-scale test and the value measured in the large-scale test was smaller than that in the comparative examples, and thus the result of the large-scale test could be industrially estimated precisely from the result of the small-scale tests.

In the inventive example VNC, the correlation was obtained using the drop weight test for the surface part and the V-notch Charpy impact test for the inner region. It was observed that the accuracy was slightly lower than that in the inventive example CNC1 but was higher than that in the comparative examples.

In the inventive examples, the error was relatively small but the error was greatly affected by the number of data pieces. Accordingly, when the number of data pieces was greater than that in the examples included in this specification, there was a tendency that the error increases. The error in the aforementioned example was obtained with N=10 and the error further increased when N>10. That is, when N becomes several tens to several hundred in an actual steel evaluation test, it was anticipated that the error becomes greater than that in the aforementioned example. Even in such cases, the invention provides a simple and high-accuracy determination method which was satisfactorily useful.

FIG. 8A is a diagram illustrating a correlation between the result of the composite small-scale test using the method according to the first embodiment of the present invention and the arrestability measured in the large-scale test. The drop weight test was performed on a surface-small-scale-test-piece, the chevron-notch Charpy impact test was performed on an inner-small-scale-test-piece, and the weighted-average of the results was calculated. The correlation was considerably higher than that in the comparative examples.

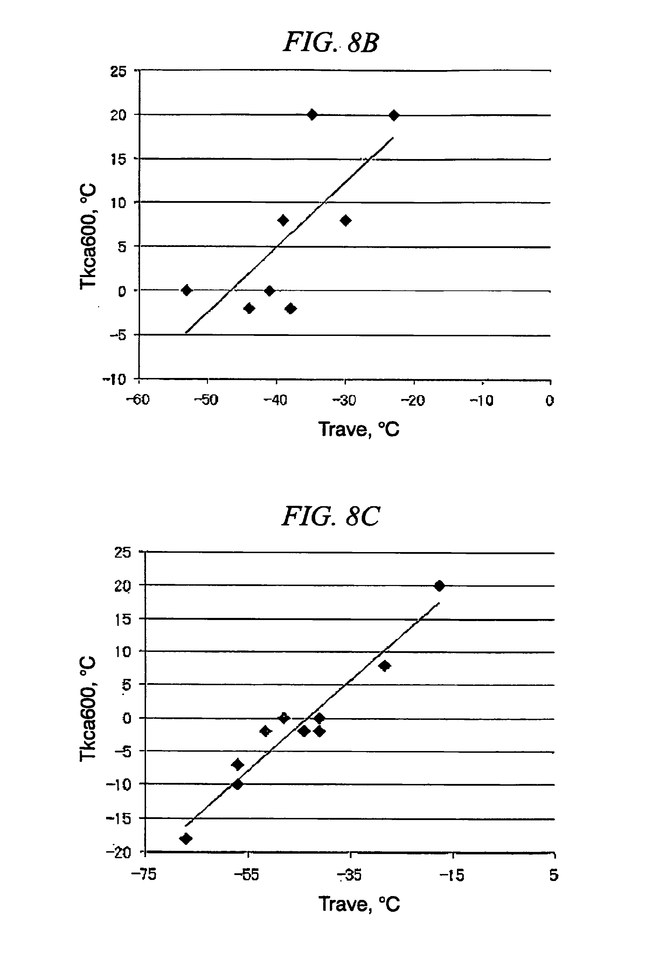

FIG. 8B is a diagram illustrating a correlation between the result of the composite small-scale test using the method according to the comparative example NDT and the arrestability measured in the large-scale test.

Example 2

In Steel 5, Steel 7, Steel 9, and Steel 10, the error of estimation accuracy was 4°C or higher, even in the method according to the inventive example CNC1 according to the first embodiment of the present invention. Accordingly, an additional small-scale was performed, and the estimation using a small-scale test at three positions was attempted. The result was shown as the inventive example CNC2 in Table 4. In the inventive example CNC2, it was observed that the error further decreased and the result of the large-scale test could be precisely estimated from the result of the small-scale test.

FIG. 8C is a diagram illustrating a correlation between the result of the composite small-scale test using the method according to the second embodiment of the present invention and the arrestability measured in the large-scale test. In the aforementioned first embodiment, the surface-small-scale-test-piece was sampled from the position 12 shown in FIG. 2B and the inner-small-scale-test-piece was sampled from one position, the position 9a shown in FIG. 2B. In the second embodiment, the surface-small-scale-test-piece was sampled from the position 12 shown in FIG. 2B and the inner-small-scale-test-piece was sampled from two positions 9a and 11 shown in FIG. 2B. The drop weight test (NDT, Small-scale Test 1) was performed on the surface-small-scale-test-piece, the chevron-notch Charpy impact tests (CNC, Small-scale Tests 2 and 3) were performed on the two inner-small-scale-test-pieces, and the weighted-average of the results of three small-scale tests was calculated. By using the method according to the second embodiment, the highest correlation between the estimated value and the measured value among the present tests was obtained.

FIG. 8D is a diagram illustrating a correlation between the result of the composite small-scale test using the method according to the first embodiment of the present invention and the arrestability measured in the large-scale test, similarly to FIG. 8A. The drop weight test was performed on the surface-small-scale-test-pieces, the V-notch Charpy impact test was performed on the inner-small-scale-test-piece, and the weighted-average of the results was calculated. The test shown in FIG. 8A was different from the test shown in FIG. 8D, in whether the inner-small-scale-test-piece was the chevron-notch Charpy impact test piece (FIG. 8A) or the V-notch Charpy impact test piece (FIG. 8D). Even in the result shown in FIG. 8D, higher correlation appeared than that in the comparative example.

[Table 4]

| | No. | Steel plate No. | Tkca600 measured (°C) | Small-scale Test 1 | | | Small-scale Test 2 | | | Small-scale Test 2 | | | Tkca600 estimated from small-scale test result (°C) | Difference between measured value and estimated value |
|---|---|---|---|---|---|---|---|---|---|---|---|---|---|---|
| | | | | Type | Sampling position | Result | Type | Sampling position | Result | Type | Sampling position | Result | | |
| Inventive Example CNC2 | 49 | Steel 5 | -2 | NDT | 12 | -50 | CNC | 11 | -50 | CNC | 11 | -50 | -6 | 4 |
| | 50 | Steel 7 | 8 | NDT | 12 | -30 | CNC | 11 | -30 | CNC | 11 | -30 | 10 | -2 |
| | 51 | Steel 9 | -2 | NDT | 12 | -65 | CNC | 11 | -35 | CNC | 11 | -35 | -1 | -1 |
| | 52 | Steel 10 | 0 | NDT | 12 | -80 | CNC | 11 | -25 | CNC | 11 | -25 | -3 | 3 |

In the method of the inventive example CNC2 according to the second embodiment, even in the Steel 5, Steel 7, Steel 9, and Steel 10, the measured TKca6000 could be estimated with a high accuracy.

In the first and second embodiments described above, in the inventive examples, the difference between the value estimated from the small-scale test and the value measured in the large-scale test was smaller than that in the comparative examples, and thus, the result of the large-scale test can be industrially estimated precisely from the result of the small-scale test.

That is, according to the invention, it was observed that the arrestability Kca estimated from the result of the small-scale test agreed with the arrestability Kca obtained from the actual large-scale test, with incredibly high accuracy over various steel types and various production methods.

Example 3

In order to more clearly describe the advantageous effects of the invention, the brittle crack propagation arrestability of more steel plate specimens were determined through the use of the methods according to the first and second embodiments. In Example 3, by increasing the number of steel plate specimens as an evaluation target, the advantageous effects of the evaluation methods according to the first and second embodiments were statistically studied. The steel plate manufacturing method, the steel component, the composite small-scale test method, and the like were based on Examples 1 and 2. The list of results in this example is shown in Table 5.

[Table 5]

| Standard | Thickness | Test No. | Y Test | Y Position | X1 Test | X1 Position | X2 Test | X2 Position | Inventive example/Comparative example | Number of steel plates for correlating equation | Number of test steel plates | Standard Deviation (°C) |
|---|---|---|---|---|---|---|---|---|---|---|---|---|
| EH47 | 50 | 1 | VNC | 10a | VNC | 8a | | | Comparative example | 8 | 60 | 16.2 |
| | | 2 | VNC | 10a | VNC | 9a | | | Comparative example | | | 10.5 |
| | | 3 | CNC | 10a | CNC | 8a | | | Comparative example | | | 11.2 |
| | | 4 | CNC | 10a | CNC | 9a | | | Comparative example | | | 9.8 |
| | | 5 | NDT | 12 | VNC | 9a | | | Inventive example | | | 4.8 |
| | | 6 | NDT | u | PCC | 9a | | | Inventive example | | | 3.1 |
| | | 7 | NDT | 12 | CNC | 8a | | | Inventive example | | | 4.2 |
| | | 8 | NDT | 12 | CNC | 9a | | | Inventive example | | | 3.2 |
| EH47 | 70 | 12 | VNC | 10a | VNC | 9a | | | Comparative example | 8 | 48 | 15.2 |
| | | 13 | NDT | 1.2 | CNC | 9a | | | Inventive example | | | 5.3 |
| | | 14 | NDT | 12 | CNC | 9a | CNC | 11 | Inventive example 2 | | | 2.2 |
| EH40 | 80 | 15 | VNC | 10a | VNC | 8a | | | Comparative example | 8 | 28 | 17.3 |
| | | 16 | VNC | 10a | VNC | 9a | | Comparative | Comparative example | | | 12.2 |
| | | 17 | CNC | 10a | CNC | 8a | | | Comparative example | | | 12.5 |
| | | 18 | CNC | 10a | CNC | 9a | | | Comparative example | | | 11.7 |
| | | 19 | NDT | 12 | VNC | 9a | | | Inventive example | | | 5.8 |
| | | 20 | NDT | 12 | CNC | 9a | | | Inventive example | | | 3.1 |
| | | 21 | NDT | 12 | VNC | 9a | VNC | 11 | Inventive example 2 | | | 3.9 |
| | | 22 | NDT | 12 | CNC | 9a | CNC | 11 | Inventive example 2 | | | 2.1 |
| HT100 | 50 | 23 | VNC | 10a | VNC | 8a | | | Comparative example | 8 | 20 | 11.5 |
| | | 24 | NDT | 12 | VNC | 9a | | | Inventive example | | | 4.2 |

In Table 5, column Y represents the surface-small-scale-test, column X1 represents the first inner-small-scale-test, and column X2 represents the second inner-small-scale-test. VNC represents the V-notch Charpy impact test, CNC represents the chevron-notch Charpy impact test, NDT represents the drop weight test, and PCC represents the pre-crack Charpy impact test. The standard deviation column represents the standard deviation of the measured value of the TKca temperature with respect to the estimated value of the TKca temperature in the evaluated steel plates (sample steel plates). Blanks in X2 column indicates that the test using the second inner-small-scale-test-piece was not performed.

In this example, Steel Plates EH40 and EH47 of high-strength steel for shipbuilding with a thickness of 50 mm to 80 mm and Steel Plate HT100 for hydraulic steel pipe with a thickness of 50 mm were tested. First, eight standard steel plates were prepared for each of the steel standards, the ESSO tests (large-scale test) were performed on the standard steel plates, and the temperature at which TKca = 6000 was measured. Small-scale-test-pieces were sampled from various positions in thickness of the same standard steel plate, various small-scale tests are performed using the method according to the first embodiment (Test Nos. 5, 6, 7, 8, 13, 19, 20, and 24) or the second embodiment (Test Nos. 14, 21, and 22), and the transition temperatures were measured. For comparative examples, composite small-scale tests were used in which methods other than NDT was performed as the surface small-scale test. The correlating equation (specifically, the coefficients of the correlating equation) between the large-scale test result and the composite small-scale test results was obtained.

Twenty to sixty test steel plates (steel plate specimen) were prepared for each steel plate standard and various composite small-scale tests as in the standard steel plates were performed on the test steel plates. By substituting the results of the composite small-scale tests into the correlating equation, the estimated value of TKca6000 for each test steel plate was obtained. For the purpose of verification, by sampling 2 to 4 ESSO test pieces from the test steel plates and performing the ESSO test as a large-scale test, the temperature of TKca=6000 was measured. In this way, the difference between the estimated and the measured values of TKca6000 was calculated for all the test steel plates, and the standard deviation was calculated from each test number.

In the test of the comparative example, the smallest standard deviation was 9.8°C (Test No. 4), and satisfactory accuracy was not obtained through the prediction using the composite small-scale test. On the other hand, among the inventive examples, even the largest standard deviation was 5.8°C (Test No. 19) and the error up to $2\sigma$ was less than 12°C, and thus the estimation was obtainable with high accuracy. When the plate was thicker, i.e., in the range of 70 mm to 80 mm, there was a tendency that the standard deviation increased. However, in Inventive Example 2 according to the second embodiment, since the small-scale test result (X2) at the 1/4t position was added, it was confirmed that the accuracy was further improved and that the determination with higher accuracy was obtainable.

Industrial Applicability

According to the present invention, it is possible to omit highly cost consuming large-scale tests, e.g. the ESSO test, that requires large-scale testing equipment. That is, it is possible to estimate the arrestability of an actual product with comparable accuracy as in the large-scale tests by choosing a steel plate specimen out of product steel plates of each batch, and performing a small-scale test using small-scale-test-pieces cut out from the steel plate specimen. By using the method according to the invention, it is possible to provide quality assurance at the level of the product steel plate of each batch based on small-scale tests instead of quality assurance at the level of compositions and production processes.

Reference Signs List

Za, Zb, Zc, Zd: BRITTLE CRACK PROPAGATION FACE
a, b, c, d: CRACK TIP
7: STEEL PLATE
8, 8a, 9, 9a, 10, 10a, 11, 12: SMALL-SCALE-TEST-PIECE
101: DROP WEIGHT TEST PIECE
101a: ONE SURFACE
101b: WELD BEAD
102: SMALL-SCALE-TEST-PIECE
103: SMALL-SCALE-TEST-PIECE
N: NOTCH
200: DROP WEIGHT TESTING EQUIMENT
200b: TEST PIECE SETTING PLATFORM
200a: WEIGHT

**Claims**

1. A method of determining brittle crack propagation arrestability of a high-strength steel plate, comprising the steps of:

   performing a large-scale test and a composite small-scale test using standard steel;
   calculating a correlation model between a result of the large-scale test and a result of the composite small-scale test obtained using the standard steel;
   performing the composite small-scale test using a steel specimen; and
   estimating the brittle crack propagation arrestability of the steel specimen by substituting the result of the composite small-scale test using the steel specimen into the correlation model,
   wherein the large-scale test is one of an ESSO test and a double tension test, and
   the composite small-scale test includes the sub steps of:

   (a) collecting a surface-small-scale-test-piece including a surface part of a steel plate;
   (b) collecting one or more inner-small-scale-test-pieces from one or more inner regions that do not include the surface part of the steel plate;
   (c) performing a NRL drop weight test defined in E208-06 of the ASTM (Standards of American Society for Testing and Materials) using the surface-small-scale-test-piece; and
   (d) performing, using the inner-small-scale-test-pieces, one of a chevron-notch Charpy impact test, a V-notch Charpy impact test, a sharp-notch Charpy impact test, a pressed-notch Charpy impact test, a pre-cracked Charpy impact test, a three-face sharp-notch Charpy impact test, and a U-notch Charpy impact test.

2. The method of determining brittle crack propagation arrestability of a high-strength steel plate according to claim 1, wherein,
   when Y represents an NDT temperature that is a result of the NRL drop weight test using the surface-small-scale-test-piece,
   X1 represents a fracture appearance transition temperature or an absorbed energy transition temperature which is a result of one of the chevron-notch Charpy impact test, the V-notch Charpy impact test, the sharp-notch Charpy impact test, the pressed-notch Charpy impact test, the pre-cracked Charpy impact test, the three-face sharp-notch Charpy impact test, and the U-notch Charpy impact test, using the inner-small-scale-test-pieces,
   a, b, and d represent coefficients, and
   TKca represents a target Kca critical temperature, that is a critical temperature at which a Kca value can be guaranteed, the Kca value being measured in a brittle crack propagation arresting test for the standard steel,
   the correlation model is expressed by;
   a·Y + b·X1 + d = TKca.

3. The method of determining brittle crack propagation arrestability of a high-strength steel plate according to claim 2, wherein the estimating the brittle crack propagation arrestability of the steel specimen further includes the sub steps of:

   substituting Y' and X1', which are results of the composite small-scale test using the steel specimen, into the correlation model, and thereby calculating TKca', which is an estimated value of the target Kca critical temperature of the steel specimen; and
   comparing a measured target Kca critical temperature TKca of the standard steel with the TKca', and if TKca' ≤ TKca is satisfied, determining that the brittle crack propagation arrestability of the steel specimen is acceptable.

4. The method of determining brittle crack propagation arrestability of a high-strength steel plate according to claim 1, wherein
   when Y represents an NDT temperature that is a result of the NRL drop weight test using the surface-small-scale-test-piece,
   X1 represents a fracture appearance transition temperature which is a result of one of the chevron-notch Charpy impact test, the V-notch Charpy impact test, the sharp-notch Charpy impact test, the pressed-notch Charpy impact test, the pre-cracked Charpy impact test, the three-face sharp-notch Charpy impact test, and the U-notch Charpy impact test, using one of the inner-small-scale-test-pieces that is collected from a first inner region,
   X2 represents a fracture appearance transition temperature which is a result of one of the chevron-notch Charpy impact test the V-notch Charpy impact test the sharp-notch Charpy impact test, the pressed-notch Charpy impact test, the pre-cracked Charpy impact test, the three-face sharp-notch Charpy impact test, and the U-notch Charpy impact test, using one of the inner-small-scale-test-pieces that is collected from a second inner region,
   a, b, c, and d represent coefficients, and

TKca represents a target Kca critical temperature, that is a critical temperature at which a Kca value can be guaranteed, the Kca value being measured in a brittle crack propagation arresting test for the standard steel,
the correlation model is expressed by;
$a \cdot Y + b \cdot X1 + c \cdot X2 + d = TKca$.

5. The method of determining brittle crack propagation arrestability of a high-strength steel plate according to claim 4, wherein the estimating the brittle crack propagation arrestability of the steel specimen further includes the sub steps of:

substituting Y', X1', and X2', which are results of the composite small-scale test using the steel specimen, into the correlation model, and thereby calculating TKca' which is an estimated value of the target Kca critical temperature of the steel specimen; and
comparing a measured target Kca critical temperature TKca of the standard steel with the TKca' and determining that the brittle crack propagation arrestability of the steel specimen is acceptable when $TKca' \leq TKca$ is satisfied.

6. The method of determining brittle crack propagation arrestability of a high-strength steel plate according to any one of claims 1 to 5, wherein the inner region is a region not including a central part in a thickness direction but including a position located within 5 mm from the central part in the thickness direction.

7. The method of determining brittle crack propagation arrestability of a high-strength steel plate according to any one of claims 1 to 5, wherein the inner region is a region including a position a quarter way through in the thickness direction.

8. The method of determining brittle crack propagation arrestability of a high-strength steel plate according to any one of claims 1 to 5,
wherein an yield strength of the high-strength steel plate is in the range of 240 to 1000 N/mm$^2$, and
wherein the high-strength steel plate is a steel plate for a large vessel hull or a hydraulic steel pipe.

9. The method of determining brittle crack propagation arrestability of a high-strength steel plate according to any one of claims 1 to 5, wherein thicknesses of the surface-small-scale-test-piece and the inner-small-scale-test-pieces are in the range of 10 to 25 mm.

10. The method of determining brittle crack propagation arrestability of a high-strength steel plate according to any one of claims 1 to 5, wherein a thickness of the high-strength steel plate is equal to or more than 50 mm.

11. The method of determining brittle crack propagation arrestability of a high-strength steel plate according to any one of claims 1 to 5,
wherein, in the drop weight test, a brittle weld bead is disposed on the surface-small-scale-test-piece surface that corresponds to a surface of the steel specimen, and
wherein a notch is formed on a surface of the inner-small-scale-test-piece along a thickness direction of the steel specimen.

**Patentansprüche**

1. Verfahren zur Bestimmung des Auffangvermögens der Sprödrissausbreitung in einem hochfesten Stahlblech, das die Schritte aufweist:

Durchführen eines Großversuchs und eines zusammengesetzten Kleinversuchs mit Hilfe von Standardstahl;
Berechnen eines Korrelationsmodells zwischen einem Ergebnis des Großversuchs und einem Ergebnis des zusammengesetzten Kleinversuchs, das mit Hilfe des Standardstahls erhalten wurde;
Durchführen des zusammengesetzten Kleinversuchs mit Hilfe einer Stahlprobe; und
Schätzen des Auffangvermögens der Sprödrissausbreitung in der Stahlprobe durch Einsetzen des Ergebnisses des zusammengesetzten Kleinversuchs mit Hilfe der Stahlprobe in das Korrelationsmodell,
wobei der Großversuch ein ESSO-Test oder ein Doppelzugversuch (Double Tension Test) ist und der zusammengesetzte Kleinversuch die Teilschritte aufweist:

(a) Entnehmen eines Kleinversuch-Oberflächenprüfstücks, das ein Oberflächenteil eines Stahlblechs enthält;
(b) Entnehmen eines oder mehrerer Kleinversuch-Innenprüfstücke aus einem oder mehreren Innenbereichen, die nicht das Oberflächenteil des Stahlblechs enthalten;

(c) Durchführen eines in E208-06 der ASTM (Normen der American Society for Testing and Materials) festgelegten NRL-Fallgewichtsversuchs mit Hilfe des Kleinversuch-Oberflächenprüfstücks; und

(d) mit Hilfe der Kleinversuch-Innenprüfstücke erfolgendes Durchführen eines Chevronkerbschlagversuchs nach Charpy, eines V-Kerbschlagversuchs nach Charpy, eines Scharfkerbschlagversuchs nach Charpy, eines Presskerbschlagversuchs nach Charpy, eines Anrissschlagversuchs nach Charpy, eines Dreiflächen-Scharfkerbschlagversuchs nach Charpy oder eines U-Kerbschlagversuchs nach Charpy.

2. Verfahren zur Bestimmung des Auffangvermögens der Sprödrissausbreitung in einem hochfesten Stahlblech nach Anspruch 1, wobei

wenn Y eine NDT- (Sprödbruchübergangs-) Temperatur darstellt, die ein Ergebnis des NRL-Fallgewichtsversuchs mit Hilfe des Kleinversuch-Oberflächenprüfstücks ist,

X1 eine Bruchbild-Übergangstemperatur oder eine Schlagarbeitsverbrauch-Übergangstemperatur darstellt, die ein Ergebnis des Chevronkerbschlagversuchs nach Charpy, des V-Kerbschlagversuchs nach Charpy, des Scharfkerbschlagversuchs nach Charpy, des Presskerbschlagversuchs nach Charpy, des Anrissschlagversuchs nach Charpy, des Dreiflächen-Scharfkerbschlagversuchs nach Charpy oder des U-Kerbschlagversuchs nach Charpy mit Hilfe der Kleinversuch-Innenprüfstücke ist,

a, b und d Koeffizienten darstellen und

TKca eine kritische Kca-Zieltemperatur darstellt, die eine kritische Temperatur ist, bei der ein Kca-Wert garantiert werden kann, wobei der Kca-Wert in einem Auffangversuch der Sprödrissausbreitung für den Standardstahl gemessen wird,

das Korrelationsmodell ausgedrückt ist durch

$a \cdot Y + b \cdot X1 + d = TKca$.

3. Verfahren zur Bestimmung des Auffangvermögens der Sprödrissausbreitung in einem hochfesten Stahlblech nach Anspruch 2, wobei das Schätzen des Auffangvermögens der Sprödrissausbreitung in der Stahlprobe ferner die Teilschritte aufweist:

Einsetzen von Y' und X1', die Ergebnisse des zusammengesetzten Kleinversuchs mit Hilfe der Stahlprobe sind, in das Korrelationsmodell und dadurch erfolgendes Berechnen von TKca', wobei es sich um einen Schätzwert der kritischen Kca-Zieltemperatur der Stahlprobe handelt; und

Vergleichen einer gemessenen kritischen Kca-Zieltemperatur TKca des Standardstahls mit TKca' und bei Erfüllung von TKca' ≤ TKca erfolgendes Bestimmen, dass das Auffangvermögen der Sprödrissausbreitung in der Stahlprobe annehmbar ist.

4. Verfahren zur Bestimmung des Auffangvermögens der Sprödrissausbreitung in einem hochfesten Stahlblech nach Anspruch 1, wobei

wenn Y eine NDT- (Sprödbruchübergangs-) Temperatur darstellt, die ein Ergebnis des NRL-Fallgewichtsversuchs mit Hilfe des Kleinversuch-Oberflächenprüfstücks ist,

X1 eine Bruchbild-Übergangstemperatur darstellt, die ein Ergebnis des Chevronkerbschlagversuchs nach Charpy, des V-Kerbschlagversuchs nach Charpy, des Scharfkerbschlagversuchs nach Charpy, des Presskerbschlagversuchs nach Charpy, des Anrissschlagversuchs nach Charpy, des Dreiflächen-Scharfkerbschlagversuchs nach Charpy oder des U-Kerbschlagversuchs nach Charpy mit Hilfe eines der Kleinversuch-Innenprüfstücke ist, das aus einem ersten Innenbereich entnommen ist,

X2 eine Bruchbild-Übergangstemperatur darstellt, die ein Ergebnis des Chevronkerbschlagversuchs nach Charpy, des V-Kerbschlagversuchs nach Charpy, des Scharfkerbschlagversuchs nach Charpy, des Presskerbschlagversuchs nach Charpy, des Anrissschlagversuchs nach Charpy, des Dreiflächen-Scharfkerbschlagversuchs nach Charpy oder des U-Kerbschlagversuchs nach Charpy mit Hilfe eines der Kleinversuch-Innenprüfstücke ist, das aus einem zweiten Innenbereich entnommen ist,

a, b, c und d Koeffizienten darstellen und

TKca eine kritische Kca-Zieltemperatur darstellt, die eine kritische Temperatur ist, bei der ein Kca-Wert garantiert werden kann, wobei der Kca-Wert in einem Auffangversuch der Sprödrissausbreitung für den Standardstahl gemessen wird,

das Korrelationsmodell ausgedrückt ist durch

$a \cdot Y + b \cdot X1 + c \cdot X2 + d = TKca$.

5. Verfahren zur Bestimmung des Auffangvermögens der Sprödrissausbreitung in einem hochfesten Stahlblech nach Anspruch 4, wobei das Schätzen des Auffangvermögens der Sprödrissausbreitung in der Stahlprobe ferner die

Teilschritte aufweist:

Einsetzen von Y', X1' und X2', die Ergebnisse des zusammengesetzten Kleinversuchs mit Hilfe der Stahlprobe sind, in das Korrelationsmodell und dadurch erfolgendes Berechnen von TKca', wobei es sich um einen Schätzwert der kritischen Kca-Zieltemperatur der Stahlprobe handelt; und
Vergleichen einer gemessenen kritischen Kca-Zieltemperatur TKca des Standardstahls mit TKca' und Bestimmen, dass das Auffangvermögen der Sprödrissausbreitung in der Stahlprobe annehmbar ist, wenn TKca' ≤ TKca erfüllt ist.

6. Verfahren zur Bestimmung des Auffangvermögens der Sprödrissausbreitung in einem hochfesten Stahlblech nach einem der Ansprüche 1 bis 5, wobei der Innenbereich ein Bereich ist, der kein Mittelteil in Dickenrichtung aufweist, sondern eine Position aufweist, die innerhalb von 5 mm vom Mittelteil in Dickenrichtung liegt.

7. Verfahren zur Bestimmung des Auffangvermögens der Sprödrissausbreitung in einem hochfesten Stahlblech nach einem der Ansprüche 1 bis 5, wobei der Innenbereich ein Bereich ist, der eine Position an einem Viertel des Durchgangswegs in Dickenrichtung aufweist.

8. Verfahren zur Bestimmung des Auffangvermögens der Sprödrissausbreitung in einem hochfesten Stahlblech nach einem der Ansprüche 1 bis 5,
wobei eine Fließfestigkeit des hochfesten Stahlblechs im Bereich von 240 bis 1000 N/mm$^2$ liegt und
wobei das hochfeste Stahlblech ein Stahlblech für einen großen Schiffsrumpf oder ein Hydraulikstahlrohr ist.

9. Verfahren zur Bestimmung des Auffangvermögens der Sprödrissausbreitung in einem hochfesten Stahlblech nach einem der Ansprüche 1 bis 5, wobei Dicken des Kleinversuch-Oberflächenprüfstücks und der Kleinversuch-Innenprüfstücke im Bereich von 10 bis 25 mm liegen.

10. Verfahren zur Bestimmung des Auffangvermögens der Sprödrissausbreitung in einem hochfesten Stahlblech nach einem der Ansprüche 1 bis 5, wobei eine Dicke des hochfesten Stahlblechs mindestens 50 mm beträgt.

11. Verfahren zur Bestimmung des Auffangvermögens der Sprödrissausbreitung in einem hochfesten Stahlblech nach einem der Ansprüche 1 bis 5,
wobei im Fallgewichtsversuch eine spröde Schweißraupe auf der Kleinversuch-Prüfstückoberfläche angeordnet ist, die einer Oberfläche der Stahlprobe entspricht,
und
wobei eine Kerbe auf einer Oberfläche des Kleinversuch-Innenprüfstücks in Dickenrichtung der Stahlprobe gebildet ist.

**Revendications**

1. Procédé de détermination des performances d'arrêt de la propagation d'une fissure cassante dans une plaque d'acier hautement résistant, comprenant les étapes suivantes :

exécution d'un essai à grande échelle et d'un essai composite à petite échelle recourant à un acier standard ;
calcul d'un modèle de corrélation entre un résultat de l'essai à grande échelle et un résultat de l'essai composite à petite échelle obtenu en recourant à l'acier standard ;
exécution de l'essai composite à petite échelle en recourant à un échantillon d'acier ; et
estimation des performances d'arrêt de la propagation de la fissure cassante de l'échantillon d'acier par substitution du résultat de l'essai composite à petite échelle en recourant à l'échantillon d'acier dans le modèle de corrélation,
où l'essai à grande échelle est soit un essai ESSO soit un essai de traction double, et l'essai composite à petite échelle comprend les sous-étapes suivantes :

(a) recueil d'une petite éprouvette de surface comprenant une partie de surface d'une plaque d'acier ;
(b) recueil d'un ou de plusieurs petites éprouvettes intérieures provenant d'une ou de plusieurs zones intérieures ne comprenant pas la partie de surface de la plaque d'acier ;
(c) exécution d'un essai de choc par masse tombante NRL défini par la norme E208-06 de l'ASTM (Standards of American Society for Testing and Materials) en recourant à la petite éprouvette de surface ; et

(d) exécution, en recourant aux petites éprouvettes intérieures, d'un essai parmi l'essai de flexion par choc sur éprouvette entaillée de Charpy, l'essai de choc sur entaille en V de Charpy, l'essai de choc sur entaille pointue de Charpy, l'essai de choc sur entaille sous compression de Charpy, l'essai de choc sur fissure préexistante de Charpy, l'essai de choc sur entaille pointue à 3 facettes de Charpy, et l'essai de choc sur entaille en U de Charpy.

2. Procédé de détermination des performances d'arrêt de la propagation d'une fissure cassante dans une plaque d'acier hautement résistant selon la revendication 1, où,
si Y représente une température TTDF résultant de l'essai de choc par masse tombante NRL recourant à la petite éprouvette de surface,
X1 représente une température de transition ductile-fragile ou une température de transition d'énergie absorbée résultant d'un essai parmi l'essai de flexion par choc sur éprouvette entaillée de Charpy, l'essai de choc sur entaille en V de Charpy, l'essai de choc sur entaille pointue de Charpy, l'essai de choc sur entaille sous compression de Charpy, l'essai de choc sur fissure préexistante de Charpy, l'essai de choc sur entaille pointue à 3 facettes de Charpy, et l'essai de choc sur entaille en U de Charpy, en recourant aux petites éprouvettes intérieures,
a, b, et d représentent des coefficients, et
TKca représente une température critique Kca de consigne, qui est une température critique à laquelle une valeur Kca peut être assurée, la valeur Kca étant mesurée lors d'une essai d'arrêt de la propagation d'une fissure cassante pour l'acier standard,
le modèle de corrélation étant exprimé par :

$$a \cdot Y + b \cdot X1 + d = TKca.$$

3. Procédé de détermination des performances d'arrêt de la propagation d'une fissure cassante dans une plaque d'acier hautement résistant selon la revendication 2, où l'estimation des performances d'arrêt de la propagation de la fissure cassante de l'échantillon d'acier comprend en outre les sous-étapes suivantes :

substitution de Y' et X1', qui résultent de l'essai composite à petite échelle recourant à l'échantillon d'acier, dans le modèle de corrélation, et calcul subséquent de TKca', qui est une valeur estimée de la température critique Kca de consigne de l'échantillon d'acier ; et
comparaison d'une température critique Kca de consigne mesurée TKca de l'acier standard avec TKca', et si l'inégalité TKca' $\leq$ TKca est satisfaite, détermination que les performances d'arrêt de la propagation de la fissure cassante de l'échantillon d'acier sont acceptables.

4. Procédé de détermination des performances d'arrêt de la propagation d'une fissure cassante dans une plaque d'acier hautement résistant selon la revendication 1, où si Y représente une température TTDF résultant de l'essai de choc par masse tombante NRL recourant à la petite éprouvette de surface,
X1 représente une température de transition ductile-fragile résultant d'un essai parmi l'essai de flexion par choc sur éprouvette entaillée de Charpy, l'essai de choc sur entaille en V de Charpy, l'essai de choc sur entaille pointue de Charpy, l'essai de choc sur entaille sous compression de Charpy, l'essai de choc sur fissure préexistante de Charpy, l'essai de choc sur entaille pointue à 3 facettes de Charpy, et l'essai de choc sur entaille en U de Charpy, en recourant à une des petites éprouvettes intérieures recueillie dans une première zone intérieure,
X2 représente une température de transition ductile-fragile résultant d'un essai parmi l'essai de flexion par choc sur éprouvette entaillée de Charpy, l'essai de choc sur entaille en V de Charpy, l'essai de choc sur entaille pointue de Charpy, l'essai de choc sur entaille sous compression de Charpy, l'essai de choc sur fissure préexistante de Charpy, l'essai de choc sur entaille pointue à 3 facettes de Charpy, et l'essai de choc sur entaille en U de Charpy, en recourant à une des petites éprouvettes intérieures recueillie dans une deuxième zone intérieure,
a, b, c, et d représentent des coefficients, et
TKca représente une température critique Kca de consigne, qui est une température critique à laquelle une valeur Kca peut être assurée, la valeur Kca étant mesurée lors d'une essai d'arrêt de la propagation d'une fissure cassante pour l'acier standard,
le modèle de corrélation étant exprimé par :

$$a \cdot Y + b \cdot X1 + c \cdot X2 + d = TKca.$$

5. Procédé de détermination des performances d'arrêt de la propagation d'une fissure cassante dans une plaque d'acier hautement résistant selon la revendication 4, où l'estimation des performances d'arrêt de la propagation de la fissure cassante de l'échantillon d'acier comprend en outre les sous-étapes suivantes :

substitution de Y', X1' et X2', qui résultent de l'essai composite à petite échelle recourant à l'échantillon d'acier, dans le modèle de corrélation, et calcul subséquent de TKca' qui est une valeur estimée de la température critique Kca de consigne de l'échantillon d'acier ; et

comparaison d'une température critique Kca de consigne mesurée TKca de l'acier standard avec TKca', et si l'inégalité TKca' ≤ TKca est satisfaite, détermination que les performances d'arrêt de la propagation de la fissure cassante de l'échantillon d'acier sont acceptables.

6. Procédé de détermination des performances d'arrêt de la propagation d'une fissure cassante dans une plaque d'acier hautement résistant selon l'une des revendications 1 à 5, où la zone intérieure est une zone qui ne comprend pas une partie centrale dans le sens de l'épaisseur mais comprend un point compris dans une plage de 5 mm depuis la partie centrale dans le sens de l'épaisseur.

7. Procédé de détermination des performances d'arrêt de la propagation d'une fissure cassante dans une plaque d'acier hautement résistant selon l'une des revendications 1 à 5, où la zone intérieure est une zone comprenant un point situé au quart de la profondeur dans le sens de l'épaisseur.

8. Procédé de détermination des performances d'arrêt de la propagation d'une fissure cassante dans une plaque d'acier hautement résistant selon l'une des revendications 1 à 5, où une limite d'élasticité de la plaque d'acier hautement résistant est comprise entre 240 et 1000 N/mm$^2$, et
où la plaque d'acier hautement résistant est une plaque d'acier pour une coque de navire de grandes dimensions ou une conduite hydraulique en acier.

9. Procédé de détermination des performances d'arrêt de la propagation d'une fissure cassante dans une plaque d'acier hautement résistant selon l'une des revendications 1 à 5, où les épaisseurs de la petite éprouvette de surface et des petites éprouvettes intérieures sont comprises entre 10 et 25 mm.

10. Procédé de détermination des performances d'arrêt de la propagation d'une fissure cassante dans une plaque d'acier hautement résistant selon l'une des revendications 1 à 5, où une épaisseur de la plaque d'acier hautement résistant est supérieure ou égale à 50 mm.

11. Procédé de détermination des performances d'arrêt de la propagation d'une fissure cassante dans une plaque d'acier hautement résistant selon l'une des revendications 1 à 5, où, lors de l'essai de choc par masse tombante, un cordon de soudure de fragilité est appliqué sur la surface de la petite éprouvette de surface qui correspond à une surface de l'échantillon d'acier, et
où une entaille est formée sur une surface de la petite éprouvette intérieure dans le sens de l'épaisseur de l'échantillon d'acier.

*FIG. 1A*

*FIG. 1B*

*FIG. 2A*

*FIG. 2B*

## *FIG. 3*

## *FIG. 4A*

## *FIG. 4B*

## FIG. 5A

|     | T  | L   | W  |
|-----|-----|-----|-----|
| P-1 | 25 | 360 | 90 |
| P-2 | 19 | 130 | 50 |
| P-3 | 16 | 130 | 50 |

SLIT FORMED

## FIG. 5B

## FIG. 5C

## FIG. 5D

0.15 mm SLIT FORMED

## *FIG. 5E*

## *FIG. 6A*

35

## FIG. 6B

## FIG. 6C

## FIG. 6D

## FIG. 6E

## FIG. 7A

## FIG. 7B

## FIG. 7C

## FIG. 7D

## FIG. 7E

## FIG. 8A

## FIG. 8B

## FIG. 8C

## FIG. 8D

## FIG. 9A

```
MEASURE Y AND X1 IN TARGET STEEL TYPE
                    ↓
SET ACCEPTANCE LINE IN PLOT OF Y Vs X1
                    ↓
DETERMINE a:b FROM SLOPE OF ACCEPTANCE LINE
                    ↓
DETERMINE d FROM AVERAGE OF TKca AND a·Y+b·X1
                    ↓
            SATISFACTORY         NO    MEASUREMENT
            ACCURACY?           ───→   AT THREE POINTS
                    ↓ YES
DETERMINE CORRELATION EQUATION
```

## FIG. 9B

```
┌─────────────────────────────────────────────────┐
│  MEASURE Y, X1, AND X2 IN TARGET STEEL TYPE      │
└─────────────────────────────────────────────────┘
                        │
                        ▼
          ┌───────────────────────────┐
          │        ASSUME b=c          │
          └───────────────────────────┘
                        │
                        ▼
        ┌─────────────────────────────────┐
        │  SET ACCEPTANCE LINE IN PLOT OF  │
        │    Y vs (AVERAGE OF X1 AND X2)   │
        └─────────────────────────────────┘
                        │
                        ▼
        ┌─────────────────────────┐      ┌──────────────────┐
        │    DETERMINE a:b FROM    │      │    REPEAT b:a     │
        │  SLOPE OF ACCEPTANCE LINE│      │   AS PARAMETER    │
        └─────────────────────────┘      └──────────────────┘
                        │
                        ▼
        ┌─────────────────────────┐
        │     DETERMINE c FROM     │
        │  PLOT OF TKca vs Y+b·X/a │
        └─────────────────────────┘
                        │
                        ▼
              ╱─────────────────╲      NO
             ╱   SATISFACTORY     ╲─────────
             ╲    ACCURACY?       ╱
              ╲─────────────────╱
                        │ YES
                        ▼
┌─────────────────────────────────────────────────┐
│        DETERMINE CORRELATION EQUATION            │
└─────────────────────────────────────────────────┘
```

## FIG. 10A

SUPERFINE-
GRAIN REGION

P

## FIG. 10B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009109486 B

- JP 2007302993 A

**Non-patent literature cited in the description**

- Correlation between Kca and Small-scale Arresting Test and Arrestability Controlling Factor. Review of Arrestability of Steel Plate (5)), Summary of Lecture. Iron and Steel Institute of Japan, 1991, vol. 4, 918
- Simple Method of Evaluating Arrestability of Ultra-fine-grain Surface Steel Plate (One) - Establishment of Arrestability Estimating Equation. *West-Japan Society of Naval Architects,* 275-280

- Influence of Toughness Distribution in Plate-pressing Direction on Arrestability of Extremely-thick HT790. *National Convention, Japan Welding Society, Summary of Lecture,* 25 August 1991, vol. 49, 108-109